Europäisches Patentamt

European Patent Office

Office européen des brevets

(11) Publication number: 0 384 786
A2

## EUROPEAN PATENT APPLICATION

(21) Application number: 90301989.1

(51) Int. Cl.⁵: G11B 23/087

(22) Date of filing: 23.02.90

(30) Priority: 23.02.89 JP 21035/89 U
27.02.89 JP 20150/89 U
27.02.89 JP 20152/89 U
03.04.89 JP 38019/89 U
10.04.89 JP 42299/89 U
16.08.89 JP 210065/89 U

(43) Date of publication of application:
29.08.90 Bulletin 90/35

(84) Designated Contracting States:
DE FR GB

(71) Applicant: KONICA CORPORATION
No. 26-2, Nishishinjuku 1-chome Shinjuku-ku
Tokyo(JP)

(72) Inventor: Yasufuku, Yoshitaka
c/o Konica Corporation, 1 Sakura-machi
Hino-shi, Tokyo(JP)
Inventor: Katayama, Makoto
c/o Konica Corporation, 1 Sakura-machi
Hino-shi, Tokyo(JP)
Inventor: Takahashi, Nobuaki
c/o Konica Corporation, 1 Sakura-machi
Hino-shi, Tokyo(JP)
Inventor: Komeiji, Masayuki, Konica Magnetic
Products Inc.
801 Oaza Nakadate Azanunoge,
Tamaho-machi
Nakakoma-gun, Yamanashi-ken(JP)

(74) Representative: Senior, Alan Murray et al
J.A. KEMP & CO 14 South Square Gray's Inn
London WC1R 5EU(GB)

(54) Tape cassette.

(57) The invention provides a tape cassette in which there is provided a lock member including an attached part for being attached to the housing to support the lock member; an engaging part capable of moving between a locking position on which the engaging part comes in engagement with the protrusion of a front lid to lock the front lid on the closed condition and a releasing position on which the engaging part comes out of the engagement to allow the front lid to pivot to the open condition; a resilient part for generating a biasing force in accordance with a position of the engaging part and for biasing the engaging part to the locking position; and a releasing part responsible to an external actuating member for overcoming the biasing force of the resilient member to move the engaging part to the releasing position.

FIG. 4a

## TAPE CASSETTE

This invention relates generally to tape cassettes, and particularly to a magnetic tape cassette suitable for use as a video tape cassette.

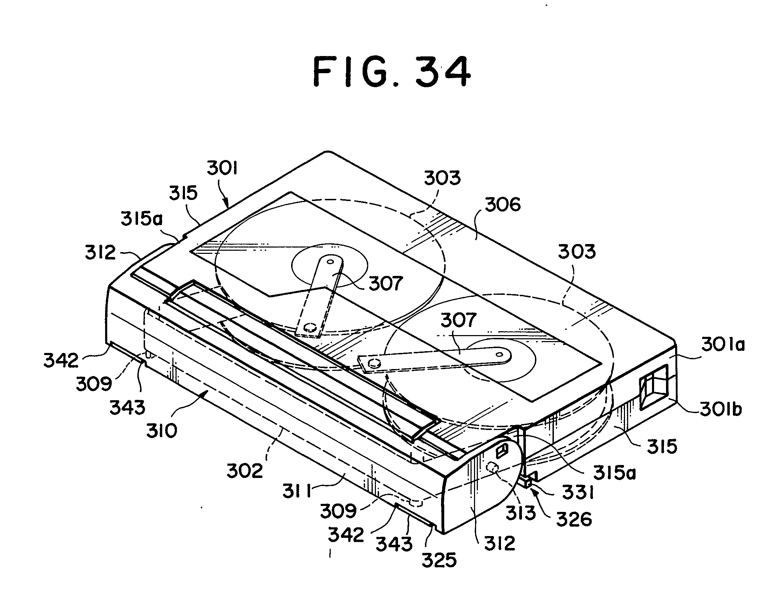

The prior art will be explained as follows. A conventional magnetic cassette for use as a video tape cassette, and particularly for an 8mm video tape cassette, is shown in Fig. 34 to Fig. 37.

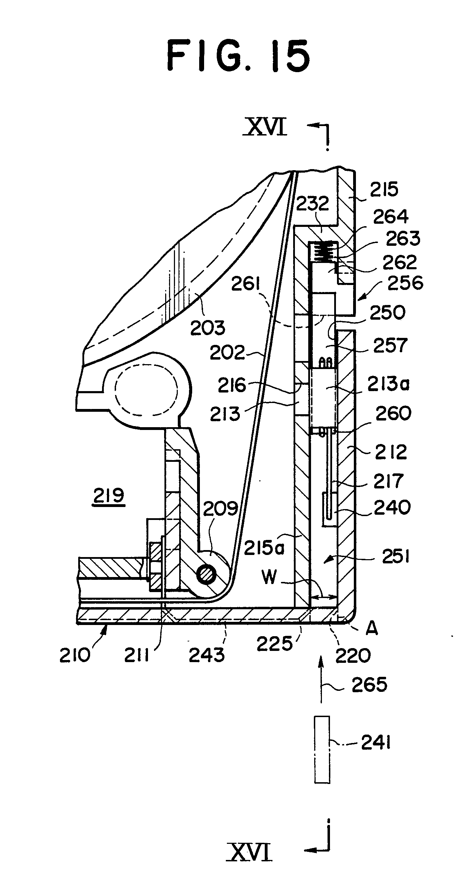

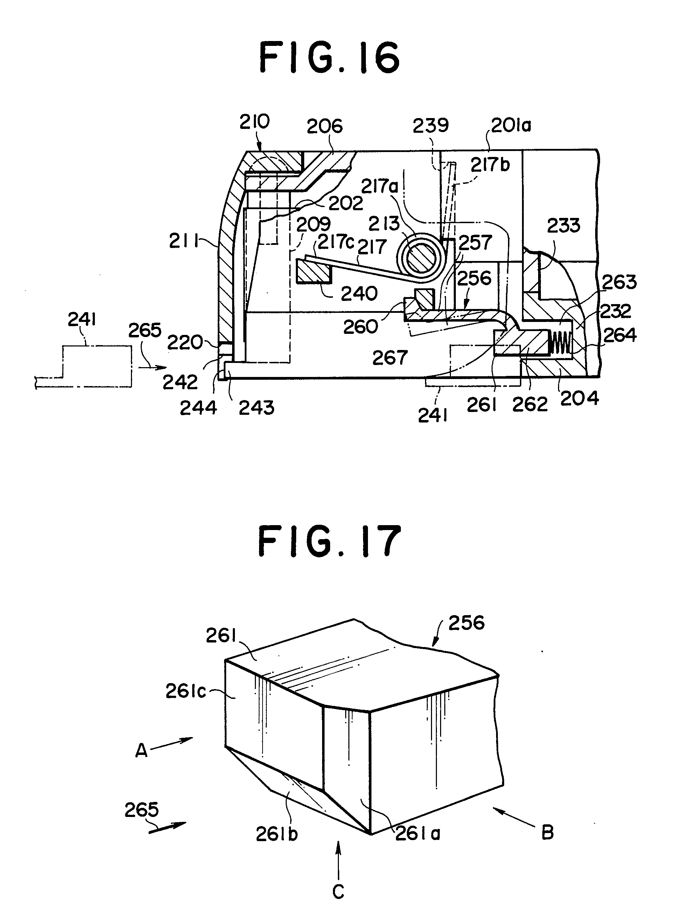

The cassette housing 301 of this magnetic tape cassette is composed of the upper half 301a of the cassette housing and the lower half 301b of the cassette housing. The tape reels 303, 303 by which the magnetic tape 302 is wound are provided in the cassette housing; one tape reel is on the left side in the cassette housing and the other tape reel is on the right side in the cassette housing as shown in Fig. 15. The tape reels 303, 303 are placed above the drive shaft holes 305, 305 and the rotation centers of the reels are pressed downward by the leaf springs 307, 307 which are fixed to the inside of the upper wall 306 of the cassette housing 301. The magnetic tape 302 is unwound and delivered from one of the reels 303 and guided by the tape guides 309, 309 which are provided on both the left side and the right side of the front portion in the cassette housing 301 in Fig.16. Then the tape 302 is wound by the other reel 303.

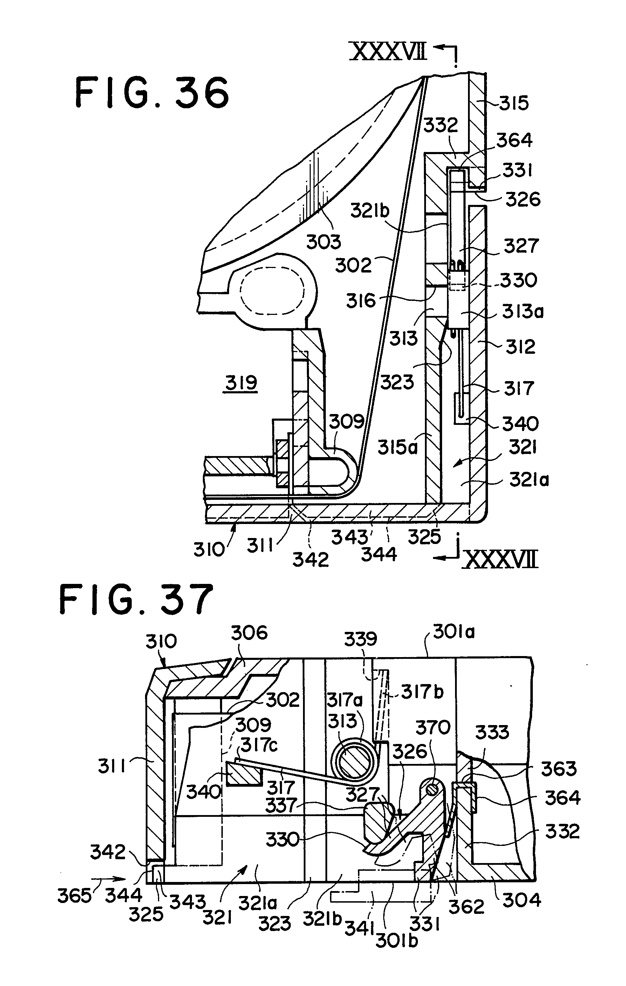

The front lid 310 to protect the magnetic tape 302 is rotatably pivoted to the cassette housing 301 at its front surface side. This front lid 310 has the front surface plate 311 which covers all of the front portion of the cassette housing 301, the connecting members 312, 312 (side walls) which connect the left and right side edges of the front surface plate 311 with the rear portion of the cassette housing 301, and the pivotal clamping members 313, 313 which are protruded from the inside of the connecting members 312, 312, wherein the pivotal clamping members 313, 313 face each other. The pivotal clamping members 313, 313 are supported by the holes 316, 316 which are formed at the front portions 315a, 315a of the left and right side walls 315, 315 of the cassette housing 301. (Refer to Fig. 36.) The front lid 310 is rotatably pivoted to the cassette housing at its front surface side, between the opened position and the closed position. However, the front lid 310 is always closed by the action of the torsion spring 317 which is provided to the pivotal clamping member 313, wherein the front lid 310 is always pushed against the the cassette housing 301 by the torsion spring 317. When the magnetic tape cassette is not being used, the front lid 310 is closed and locked to protect the outside of the magnetic tape 302 which is at the front portion of the magnetic tape cassette. When the front lid is closed, the gap 321 is formed between one of the side walls 315 of the cassette housing 301 and one of the connecting members 312 which faces the side wall 315. The lock means 326 of the front lid 310 is provided in this gap 321. When the magnetic tape cassette is inserted into a recording and playback equipment, the release member 341 of the recording and playback equipment is moved in the arrowed direction shown in Fig. 37 to the gap 321 from the front portion of the cassette housing 301. As a result, the release member 341 comes into contact with the lock means 326 as shown by a dotted line in Fig. 37, and the front lid which has been locked is released. Consequently, the front lid 310 is opened and a tape loading pin of the recording and playback equipment is put into the pocket 319 formed in the front portion of the cassette housing 301 in order to pull out the magnetic tape 302.

In Fig. 36, the ramp 323 is formed on the outside of the front edge portion 315a of the right side wall 315, and the ramp 323 forms the boundary between the front half portion 321a in which the above-described gap 321 is wide and the rear half portion 321b in which the gap 321 is narrow. To be more concrete, the ramp 323 is placed in front of the above-described hole 316. The front edge of the front edge portion 315a which is placed at the left side of the wide front half 321a of the gap 321 is formed into the inclined guide surface 325, and the gap 321 widens out into a large space. The protruded base portion 313a of the pivotal clamping member 313 which is protruded from the right connecting member 312, comes into contact with the outer surface of the front half portion 315a of the cassette housing 301. In this way, the width of the narrow rear half portion 321b is kept constant.

The rotatable lock member 326 which composes a lock means of the closed front lid 310, is provided in the narrow rear half portion 321b in the gap 321.

Referring to Fig. 36 and Fig. 37, the lock member 326 is composed of; the arm 327 which is supported by the fulcrum shaft 370; the engagement claw 330 which is provided to the tip of the arm 327; the arm 362 which is connected with the arm 327; and the compressed unit (the lock release unit) 331. At the furthest position of the gap 321, the wall member 332 of the lower cassette housing 301b and the wall member 333 of the upper cassette housing 301a are joined through the leaf-spring-through-hole 363. The leaf spring 364 is set through the leaf-spring-through-hole 363 and the lock means 326 is forced to rotate clockwise toward the lock position by the resilient force of the leaf spring 364. The lock means 326 is assembled into the lower cassette housing 301b before the upper cassette housing 301b is set on the lower cassette housing 301b. The middle coil portion 317a of the torsion spring 317 is set to the pivotal clamping member 313 and one end 317b of the torsion spring 317 is supported by the longitudinal groove 339 which is provided to the outer surface of the front edge portion 315a of the right side wall 315 of the cassette housing. The other end 317C of the torsion spring 317 is supported by the spring support 340 which is provided to the inside of the right connecting member 312 of the front lid 310.

When the magnetic tape cassette is not being used, the front lid 310 is securely locked in such a way that the engagement claw 330 of the lock means 326 always engages with the engaging portion 337 of the front lid 310 so that the front lid 310 can not be rotated around the pivotal clamping member 313. When the magnetic cassette with its front lid closed is inserted into the recording and playback equipment, the lock release member 341 provided to the recording and playback equipment is guided from the front to the cassette housing and enters the gap 321 through the front opening 342 of the front lid 310. Therefore, the lock release member 341 pushes the compressed unit 331 of the lock means 326 forward. As a result, as shown by a dotted line in Fig. 37, the lock means 326 is rotated counterclockwise pushing the leaf spring 364, and the engagement claw 330 is released from the engagement unit 337 of the front lid 310 so that the front lid 310 is unlocked.

In this case, as shown in Fig. 34 and Fig. 37, the openings 342, 342 are formed by cutting out the front plate 311 of the front lid 310 at the right side and the left side, i.e., at the lower portion of the place where magnetic tape 302 is pulled out from the cassette housing. The protruded members 343, 343 which are protruded from the front edge of the cassette housing bottom plate 304, are set in the openings 342, 342. Each protruded member 343 is set at the position where the tip 344 of the protruded member 343 is placed in the center of the width of the front plate 311 as shown in the drawing.

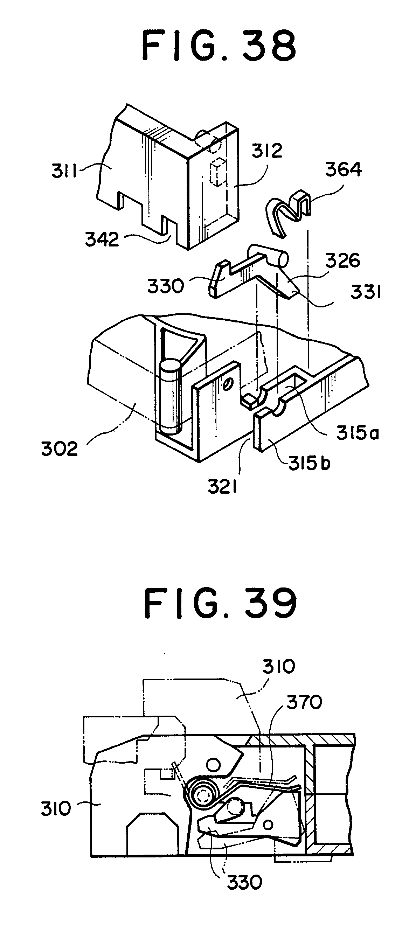

The conventional lock means which is disclosed in Japanese Utility Model No. 12455/1988 will be described as follows, referring to Fig. 38.

The front plate 311 to protect the magnetic tape 302, the side walls 315a, two side walls 315a, 315b which are separate from each other, and the gap 321 which is formed by one of the extended portions of the side walls 315a, 315b and the side plate 313, are provided to the lock means. The cut-out portion 342 is provided to the lower front portion of the front plate 311. This cut-out portion 342 is provided at the position corresponding to the gap 321, to allow the release member of the device to enter the the gap 321 from the front. Furthermore, the lid lock arm 326 is provided to the lock means, wherein the lid lock arm 326 is rotatably pivoted to the side walls 315a, 315b and can be rotated in the gap 321, and the lid lock arm 326 is pushed by the spring 364 so that the lid lock arm 326 can always engage with the front plate 326. The lid lock arm 326 has the engagement tip 330 which engages with the front plate 311 and the release tip 331 which faces the front portion of the cassette housing through the cut-out portion 342. The engagement tip 330 of the lid lock arm 326 usually engages with the front plate 311 so that the front plate can not be opened. When the release member of the device enters the gap 321 through the cut-out portion 342, it comes into contact with the release tip 331 and pushes it to release the lid lock arm 326. As a result, the front plate can be rotated.

As shown in Fig. 39, another magnetic cassette tape is disclosed in Japanese Patent Publication No. 36054/1988. The following is the explanation of the disclosed art. As shown in Fig. 39, the front lid 310 is rotatably pivoted to the side of a cassette housing to protect the magnetic tape which is provided along the opening of the front portion of the cassette housing. The lock member 330 is rotatably pivoted to the cassette housing. The lock member 330 checks the rotation of the front lid 310. When the lock member 330 is released, the front lid 310 can be rotated. The torsion spring 370 is provided to the shaft around which the front lid 310 is rotated. One end of the torsion spring 370 engages with the front lid 310 and the other end of the torsion spring engages with the lock member 330 so that the magnetic tape can be covered with the front lid 310 and the lock member 330 can be pushed by the torsion spring 370 for the front lid so that the front lid may not be opened.

A magnetic tape cassette with the same structure is disclosed in Japanese Patent Publication No. 49316/1988.

With the magnetic tape cassettes, including those described above, it is troublesome to assemble the lock means of the front lid. Especially when a small magnetic tape cassette such as an 8mm magnetic tape cassette is assembled, it is problematic to assemble the lock means of the front lid. Furthermore, the number of parts is so many that the cost of the magnetic tape cassette is increased, which is a problem to be solved.

It has been proved that there are other problems in the conventional magnetic tape cassette: since the front lid is opened and closed repeatedly, the pivotally supporting portion of the front lid lock member is worn out by abrasion, and abrasive powder is scattered in the cassette housing. Since the abrasive powder adheres to the magnetic tape, the surface of the magnetic tape becomes rough and running efficiency of the tape is lowered. Sometimes the abrasive powder could be the cause of dropout.

Referring to Fig. 36 and Fig. 37, the structure of the magnetic tape cassette is explained as follows. The lock member 326 and the gap 321 into which the release member 341 is inserted in the arrowed direction, are provided to the cassette housing. Since the inclined guide surface 325 and the ramp 323 are provided to the cassette, the release member 341 is properly guided into the gap 321 and the pushed portion 331 of the lock member 326 is properly pushed by the release member 341 even if the tape cassette is improperly set with regard to the recording and playback equipment.

However, in the above-described magnetic tape cassette, the ramp 323 can guide the cassette housing only when the release member 341 is inserted from the front in the arrowed direction. This results in restriction of the mechanism when the lock member of the front lid is released.

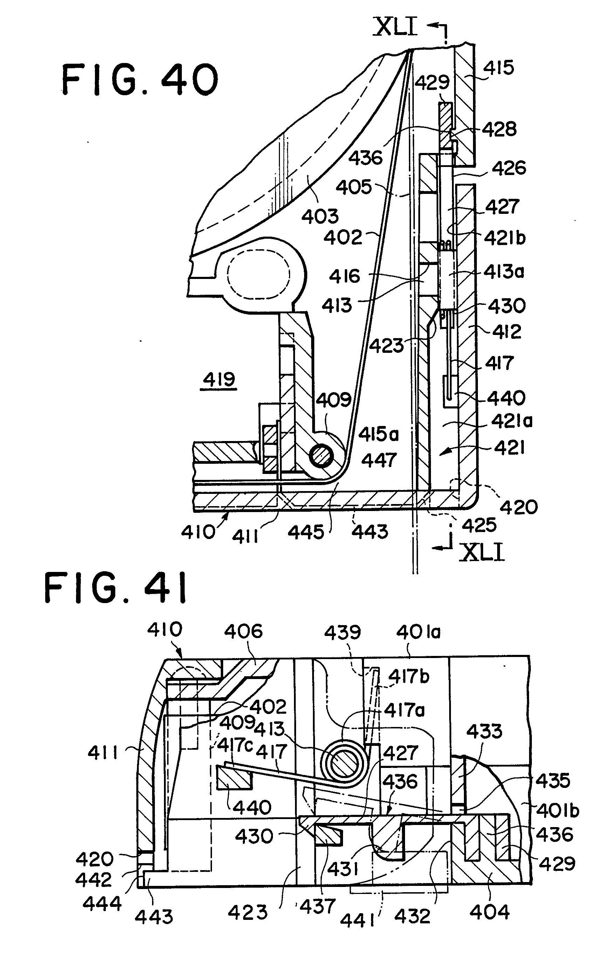

The similar problems in the cases of other conventional tape cassettes shown in Figs. 40 and 41 will be described hereunder.

In Figs. 40 and 41, the lock member 426 is an elastically deformable molded plastic member consisting of the thin flat plate portion 427, the base end portion 429 projecting downward and integrally from the base end of said flat plate portion 427 and the vertical groove 428 provided on the outer surface of said base end portion 429, the engagement claw 430 projecting from the lower surface of the front end of said flat plate portion 427 and the pressed portion (the release portion) 431 formed projecting from the middle point between the front and rear ends of the lower surface of said flat plate portion 427. The innermost wall of the gap 421 is butted through the insertion hole 435 to the wall member 432 on the side of the lower half case 401b and the wall member 433 on the side of the upper half case 401a, and the vertical rib 436 projects from the bottom of the inside surface of the right-hand wall 415 of the case close said wall member 432. The lock member 426 is required to be assembled to the lower half case 401b before the lower half case 401b is fastened together with the upper half case 401a. More particularly, the base end portion 429 of the lock member 426 is inserted into the inside of the wall member 432 of the lower half case 401b to make the vertical rib 433 engage with the vertical groove 428; the lower half case 401b and the upper half case 401a covering said lower case 401b are fastened together with the screws; the wall member 433 on the side of the upper half case prevents the base end of the flat plate portion 427 of the lock member 526 from rising by contacting thereon so that the base end 429 of the lock member 426 can be kept in a cantilever condition; and the flat plate portion 427 can be extended almost horizontally in the narrow rear half portion 421b within the gap 421 through the insertion hole 435. In this assembled oondition, the flat plate portion 427 of the lock member 426 is placed under the pivotal clamping member 413 and the engagement claw 430 is placed in front of the pivotal clamping member 413, wherein due to the elasticity of the flat plate portion 427 the engagement claw 430 engages with the engagement portion 437 protruded from the inside of the right-hand connecting member 412 of the front lid 410 which is closed. Especially, the pressed portion 431 of the lock member 426 is disposed within the narrow rear half portion 421b. The intermediate coil portion 417a of the torsion spring 417 is fitted to said pivotal clamping member 413; one end 417b of said torsion spring is supported by the longitudinal groove 439 provided in the outside surface of the front end 415a of the right-hand wall 415 of the case, whereas the other end 417c is supported by the spring receiver 440 provided on the inside surface of the right-hand connecting member 412 of the front lid 410.

Thus, when the tape cassette is not in use, the engagement claw 430 at the front end of the lock member 426 always engages with the upside of the engagement portion 437 of the front lid 410 in a closed position so that said front lid 410 is locked securely and prevented from opening upward and turning around the pivotal clamping member 413. When a tape cassette is inserted into the recording equipment with the front lid 10 closed, the release member 441 fixed on the recording equipment enters the gap 421 through said cut-out portion 420 of the front lid 410 by being guided from the front to push the front lower end of the pressed portion 431. This causes the flat plate portion 427 of the lock member 426 to be elastically deformed upward as indicated by a dotted line in Fig. 41 to be disconnected from the engagement portion 437, and the front lid 410 is unlocked.

In this case, the cut-out portion 420 in the front plate 411 of the front lid 410 is made to have the lateral width that permits the release member 441 to be guided passing near the side of the front end 415a of the right-hand wall 415 of the case rather than the lateral center of the gap 421, that is, the upper left side in Fig. 40, so that, not only when the tape cartridge is loaded deviating leftward but also when loaded deviating rightward, the release member 441 is first allowed to come into contact with the ramp 425 through the cut-out portion 420 and then allowed to enter the laterally wider front half portion 421a of the gap 421 leaving considerable room to come into contact with intermediate stepped ramp 423, whereby the release member 441 is guided properly into the laterally narrower rear half portion 421b to properly press the pressed portion 431 of the lock member 426.

Actually, however, there is a possibility that the release member 441 is caught by the ramp 423 depending on the angle of the inclination of the ramp 423 especially when the release member 441 comes into contact with the ramp 423 in the gap 421. In order to prevent such a problem, the case needs to be formed into an adequate shape considering the angle of inclination and the shape of the ramp 423. Besides, it should be noted that the release member 441 comes into contact both the inclined guiding surface 425 at front and said stepped ramp (two times in all), and this causes the wall portion 415a and other members to produce the swarf or the dust due to the abrasion or the rubbing among said members. When the swarf or the dust adheres to the surface of the tape 402 in the case, or when the swarf or dust adheres to the tape 402 at the time when the tape 402 is loaded into the recording and playback equipment, the swarf or the dust causes the dropout and the resulting deterioration of the electromagnetic conversion performance.

Further, as indicated by the dotted line in Fig. 40, in the case of said cassette tape, the edge 447 with almost orthogonal angle is formed by the inside of the front end of the side wall 415a of the case located opposite to the tape guide member 409, so that the tape 402 tends to be damaged by the said edge 447 when the tape is drawn out in the direction of the arrow 446 from the outlet 445 at the time of the tape loading. In this case, the damage occurs on the side of the tape where the magnetic layer is provided to cause the deterioration of the electromagnetic conversion characteristic or the hindrance to the run of the tape.

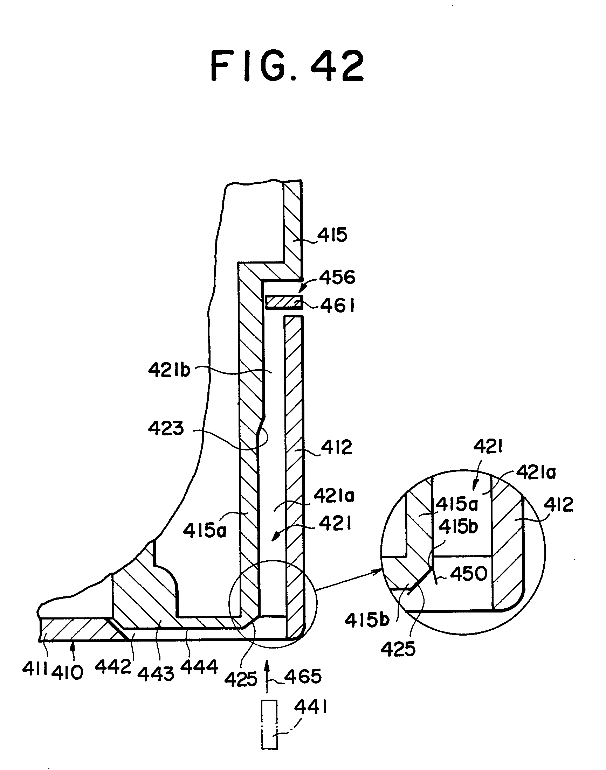

In the case of said tape cassette, the inclined guiding surface 425 is formed at the front end of the side wall portion 415a of the case, where the insertion of the release member 441 starts, and, as shown by the enlarged drawing in Fig. 42, in molding said inclined guiding surface 425, the poor closeness of the contact between the metal molds tends to cause the formation of the burrs 450, which become the hindrance to the incoming motion of the release member 441 in many instances.

A magnetic tape cassette is disclosed in Japanese Patent Publication 16834/1988. The details will be described as follows. As shown in Fig. 43, the cassette housing made from plastic is composed of the upper half case 590a and the lower half case 590b. The supply reel and the take-up reel are provided inside the cassette housing, wherein the magnetic tape 591 is wound by the reels. The tape loading pocket is provided in the front of the cassette housing. The front lid is rotatably pivoted to the cassette housing so that the front lid can be opened and closed. The tape passage restricting pins 593 to pass the tape 591 in the front of the case are provided to the right front portion and the left front portion of the lower half case 590b. (In the drawing, only the left tape passage restricting pin is shown.) The tape passage restricting pins 593 are protruded upward from the bottom plate of the cassette housing. The tape position restricting ribs 595 to control the vertical position of the tape are provided between the tape passage restricting pins 593 and the right and left side walls 594 which face the tape passage restricting pins 593, wherein the tape height restricting ribs are protruded from the bottom plate of the cassette housing. (Only the left side wall is shown in the drawing.)

However, it has been proved that there are some problems in the magnetic tape cassette described above. Although the upward and downward movements of the magnetic tape can be controlled in the above-described magnetic tape cassette, the magnetic tape does not contact with the rib properly in the case of this structure mentioned above. For that reason, the tape edge is damaged by the corner of the rib or the tape edge is folded while the tape is running.

The first aim of the present invention is to provide; a magnetic tape cassette with the front lid lock means composed of a small number of parts; a magnetic tape cassette which can be assembled with high efficiency; and a magnetic cassette tape the pivotally supporting portion of which is not worn out by abrasion even when it is used repeatedly and dropout caused by abrasive resin powder which adheres to the surface of the magnetic tape can be prevented.

The second aim of the present invention is to provide a tape cassette into which the release member can be smoothly and positively inserted to unlock the front lid.

The third aim of the present invention is to provide a magnetic tape cassette in which the tape edge is not damaged or folded, resulting in good recording and reproduction.

According to the present invention there is provided a tape cassette, comprising:
a housing in which a tape is wound around a pair of reels and along a predetermined path;
a front lid pivotally mounted on said housing to open or close the front side of said housing, said front lid having a protrusion member; and
lock means including
an attachment member attached to said housing to support said lock means,
an engaging member movable between a locking position in which said engaging member engages said protrusion member to lock said front lid in the closed condition and a releasing position in which said engaging member does not engage the protrusion member allows said front lid to pivot to an open condition,

a biasing member for generating a biasing force to bias said lock means to the locking position, and

a releasing member responsive to an external actuating member for overcoming the biasing force of said biasing member to move said lock means to said releasing position.

The first aim of the present invention can be attained by a magnetic tape cassette with the structure comprising; a cassette housing; a supply reel and a take-up reel provided in the cassette housing; a magnetic tape provided in a predetermined passage between the supply reel and the take-up reel; a front lid to protect the magnetic tape placed outside the cassette housing; and a lock means to lock the front lid which is closed, wherein a pushing member (a resilient member) to push the lock means in the locking direction together with a restricting unit provided to the cassette housing, is integrally attached to the lock means.

In the above-described magnetic tape cassette, a shaft may be provided to the above-described cassette housing, wherein a lock member of the lock means can be rotatably mounted on the shaft, and a bearing member to support the lock member may be provided to the lock member itself.

On the other hand, the bearing member to support the lock member of the lock means may be provided to the cassette housing and the shaft may be rotatably provided to the lock member.

The first aim of the present invention can be accomplished by a magnetic tape cassette with the structure comprising; a cassette housing composed of the upper half case and the lower half case; a front lid which is rotatably pivoted to the cassette housing; a receiving protruded portion provided to the front lid; groove with a noncircular section formed in the upper half case and/or in the lower half case of the cassette housing; and a lock member in which an attached member fixed to the groove, a resilient member mounted on the tip of the attached member and an engaging portion to engage with a receiving protruded portion of the front lid are integrally provided, wherein the lock member is provided to the groove with a noncircular section formed in the upper half case and/or the lower half case of the cassette housing, and the front lid is locked by the lock member when it is closed.

The first aim of the present invention is also attained by a magnetic tape cassette with the structure comprising; a cassette housing: a front lid which is attached to the cassette housing and can be opened and closed; a receiving protruded portion which is provided to the cassette housing; and a spring member having one end attached to the front lid and the other end provided with an engaging portion which engages with the receiving protruded portion to lock the front lid, wherein the front lid is pushed by the spring member in the closing direction, locked when the engaging portion engages with the receiving protruded portion, and can be opened when the engaging portion is released from the receiving protruded portion.

The second aim of the present invention is attained by a magnetic tape cassette with the structure comprising; a front lid which can be opened and closed is attached to a cassette housing; a locking member which is provided to a gap between a side wall of the cassette housing and a side wall of the front lid can lock the front lid; and an external release member to release the locking member can be inserted into the gap, wherein the above-described gap is wide at the bottom side of the cassette housing and narrow at the release side to release the locking member.

Further, the second aim of the present invention can also be accomplished by providing a cassette housing comprising a front lid, which can be either opened or closed and is fixed to the cassette housing, a lock member disposed in the gap between the side wall portion of said cassette housing and the side wall portion of said front lid and a release member inserted in said gap, wherein said gap maintains almost equal width for the portion of the gap ranging at least from the front face of said cassette housing to the release portion of said lock member, and said lock release portion is molded to the dimensions so that said lock release portion has the width larger than said gap but not exceeding the limit of the side surface of the cassette.

In the present invention, the expression "almost equal width" means not only the completely equal width but also the width including the allowable error occurring in the design process. Also, said "dimensions not exceeding the limit of the side surface of the cassette" means the condition whereat the outside of the release portion is flush with the side surface of the cassette or within the limit of the inside surface of the release portion by 0 - 0.5 mm (preferably by 0 - 0.2 mm) for the desirable performance of the release mechanism.

Further, as a preferable embodiment of the present invention, a concave opening wider towards the direction reverse to the incoming direction of said lock release member may be formed on the release portion of said lock member so that said concave portion is able to serve as the contact surface of said release member.

The third aim of the present invention is accomplished by a magnetic tape cassette with the structure comprising; a cassette housing; a supply reel and a take-up reel which are provided inside the cassette housing, a magnetic tape provided to a predetermined tape passage between the supply reel and the take-up reel; a tape guide which is provided at a predetermined position of the tape passage between the supply reel and the take-up reel; and a tape position restricting member to control the vertical position of the tape, which is defined as the stepped portion in this specification, wherein the member has a round corner so as not to damage the edge of the magnetic tape.

The present invention will be further described hereinafter with reference to the following description of exemplary embodiments and the accompanying drawings, in which:-

Fig. 1, Fig. 2, Fig. 3-a, Fig. 3-b, Fig. 3-c, and Fig. 3-d are drawings illustrating Examples 1-1 to 1-4 of a magnetic tape cassette to attain the first object of the invention.

Fig. 1 is a perspective view illustrating the cassette of an example.

Fig. 2 is a fragmentary schematic plan view of the lower half case of the cassette housing.

Fig. 3-a is a perspective view of the lock member.

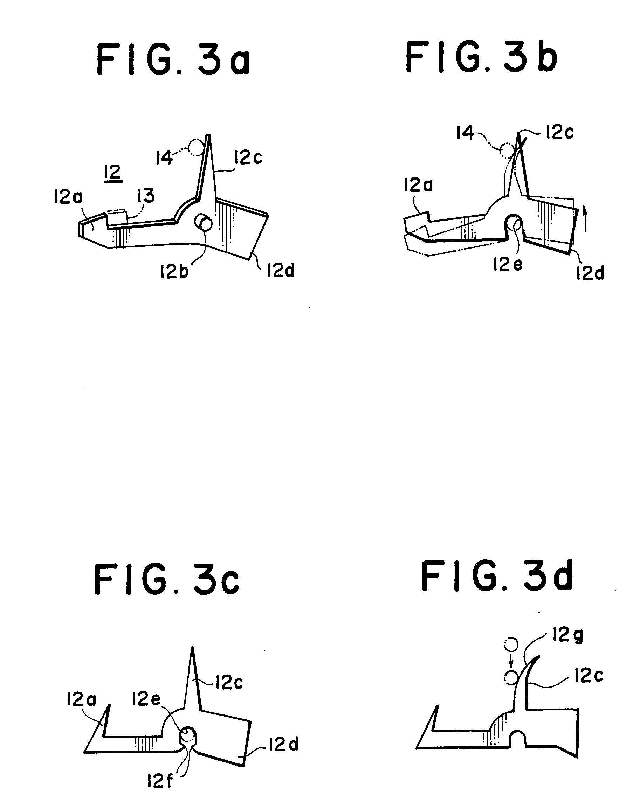

Fig. 3-b, Fig. 3-c, and Fig. 3-d are schematic side views of the lock member of another example of the invention.

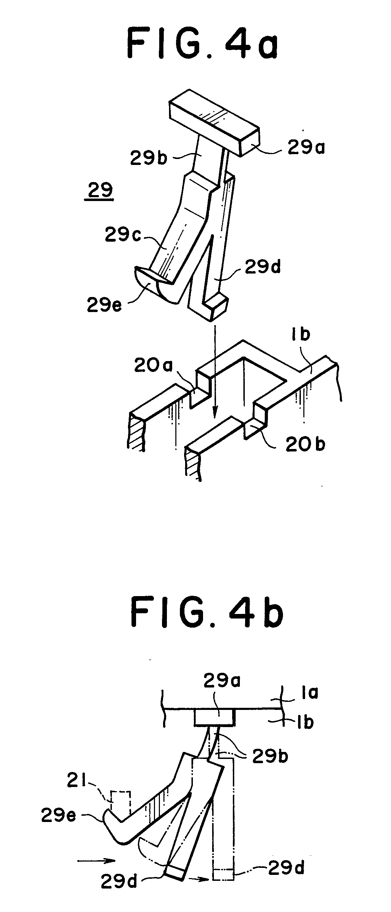

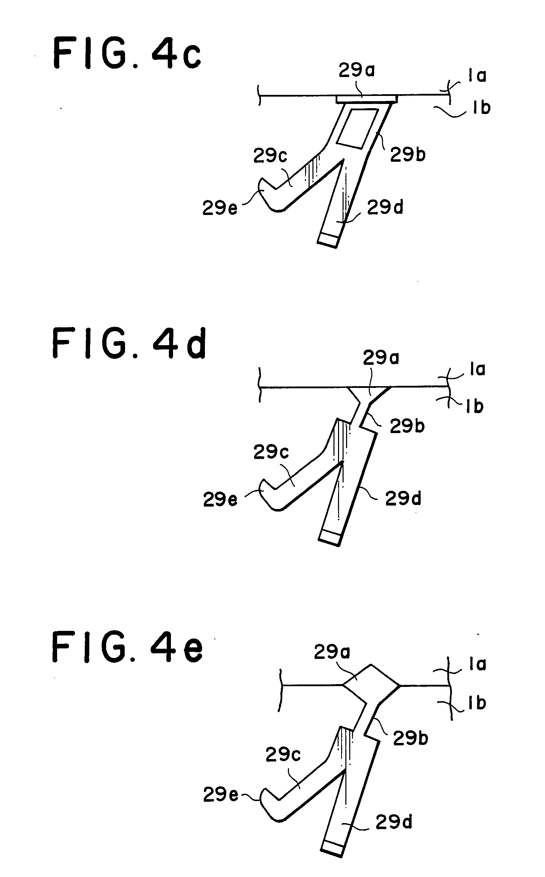

Fig. 4-a, Fig. 4-b, Fig. 4-c, Fig. 4-d, and Fig. 4-e are schematic side views of the lock member of the variations of the Examples 1-5 to 1-8 to attain the first object of the invention.

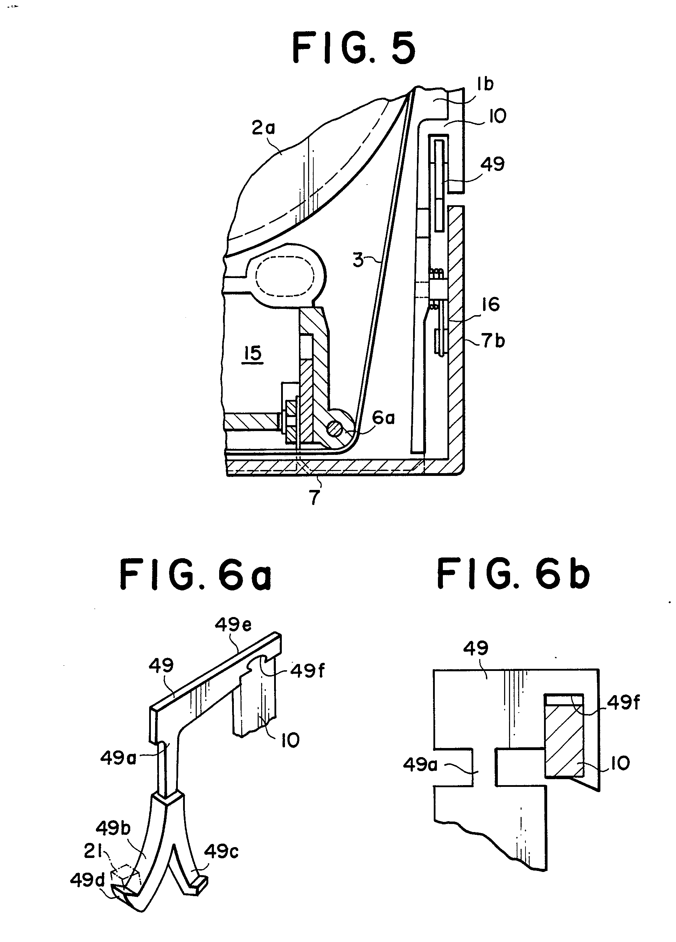

Fig. 5, Fig. 6-a, and Fig. 6-b illustrate Example 1-9 of the tape cassette of the invention. Fig. 5 is a schematic plan view of the main portion of the front lid lock means. Fig. 6-a is a perspective view of the front lid lock means. Fig. 6-b illustrates the main support portion of the front lid lock means.

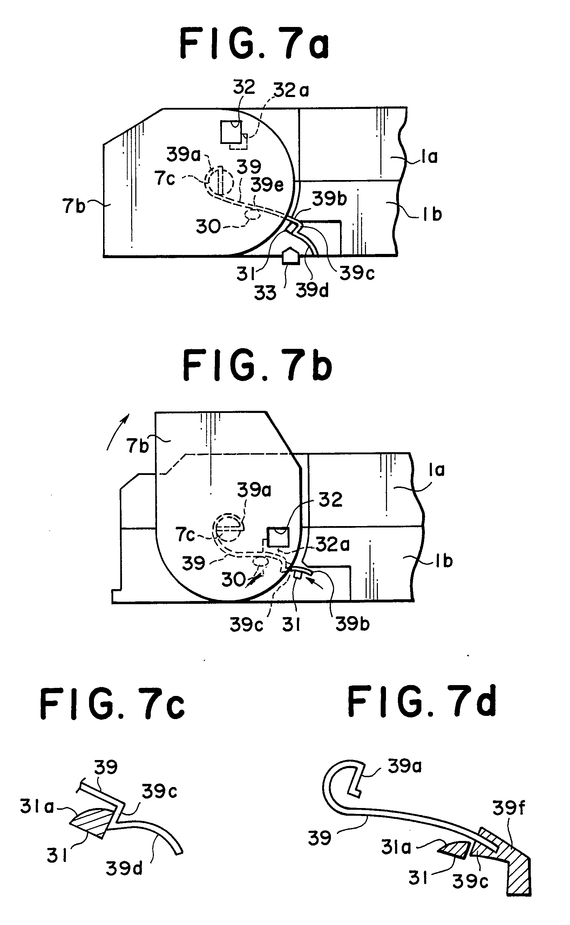

Fig. 7-a, Fig. 7-b, Fig. 7-c, and Fig. 7-d show one of the variations of the Example 1-10 to accomplish the first object of the invention.

Fig. 7-a is a schematic side view of the main portion of the cassette when its front lid is closed.

Fig. 7-b is a schematic side view of the main portion of the cassette when its front lid is open.

Fig. 7-c is a schematic illustration of the location where the leaf spring is provided.

Fig. 7-d is a schematic illustration of another example of the leaf spring.

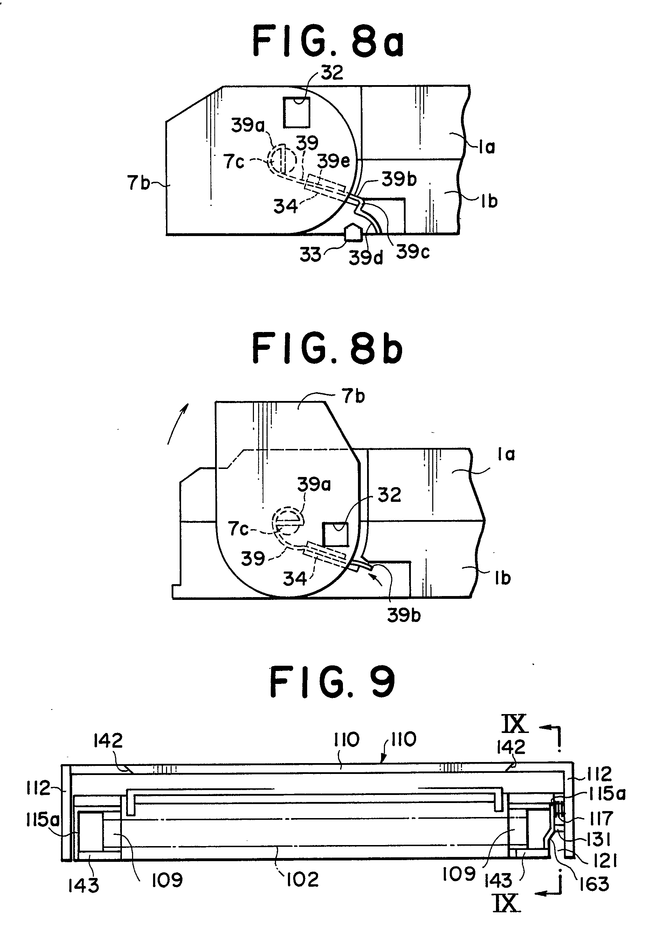

Fig. 8-a and Fig. 8-b are side views of the main portion of the spring unit of an example in which the spring unit has a guide member.

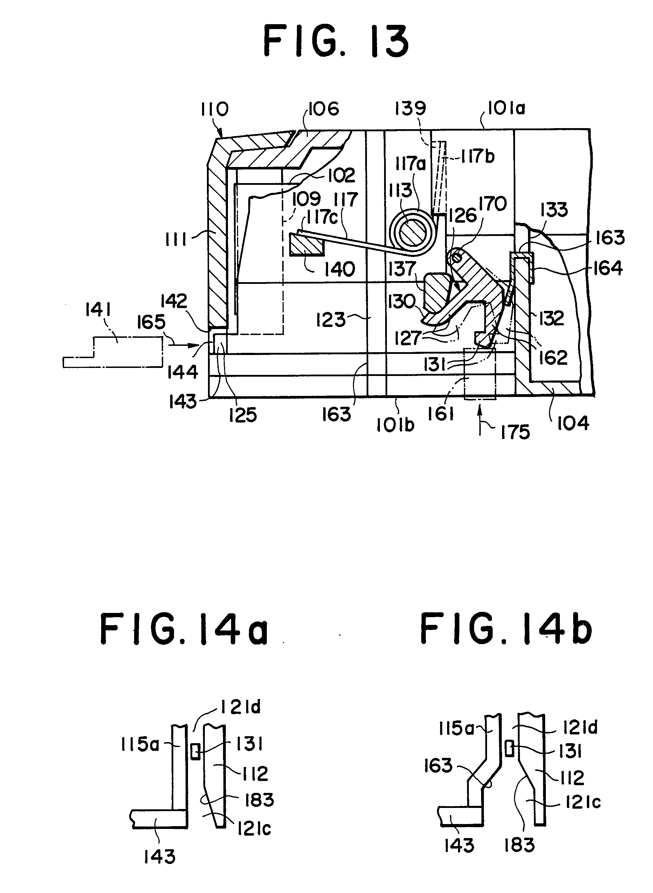

Fig. 9, to Fig. 14 are drawings which show Example 2-1 to attain the second object of the invention.

Fig. 9 is a front view of an 8mm-video tape cassette the front lid of which is open.

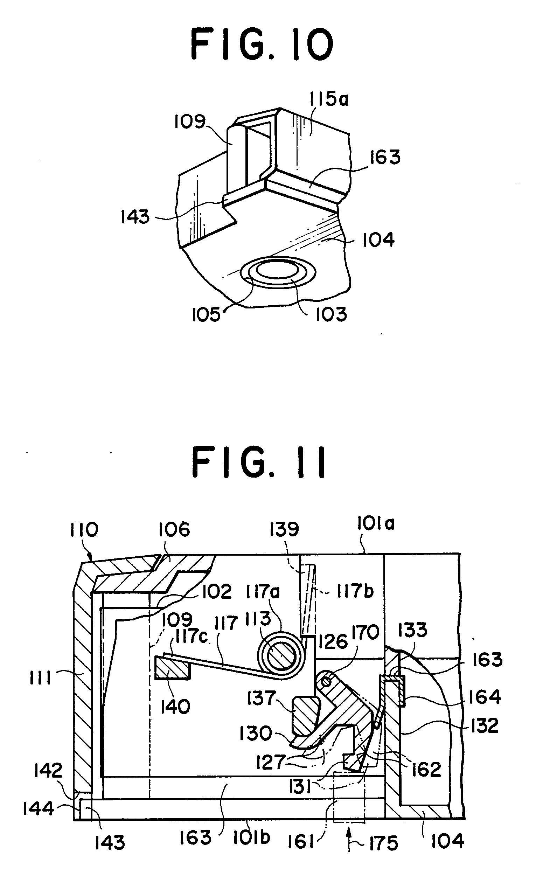

Fig. 10 is a perspective view of the tape cassette viewed from the bottom.

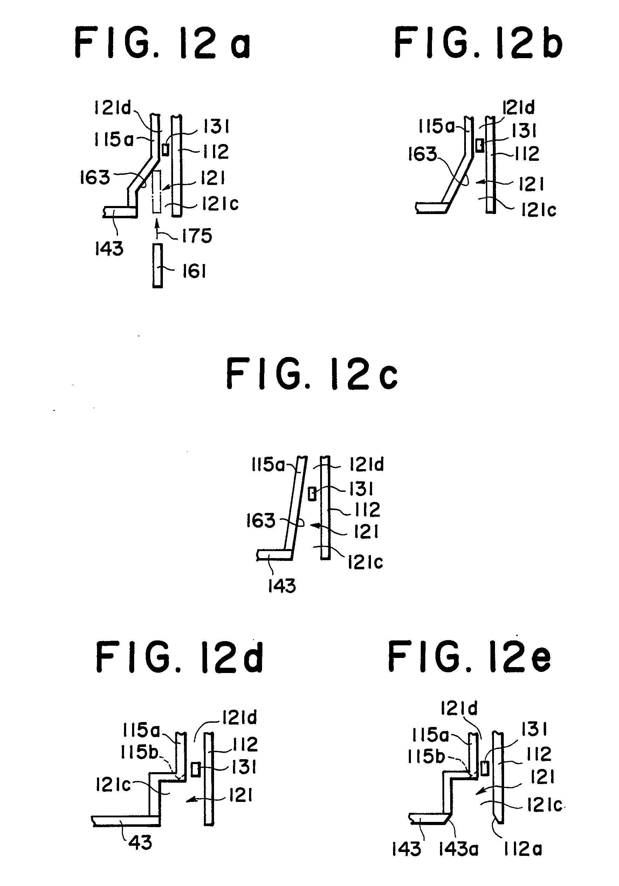

Fig. 11 is an enlarged sectional view taken on line III-III of Fig. 9.

Fig. 12-a, Fig. 12-b, Fig. 12-c, Fig. 12-d, and Fig. 12-e are front views of a part of the front of the magnetic tape cassette.

Fig. 13 is an enlarged sectional view of another example of the same portion as that shown in Fig. 11.

Fig. 14-a and Fig. 14-b are front views of another example of the same portion as that shown in Fig. 12-a to Fig. 12-e.

Fig. 15 to Fig. 28 illustrate Example 2-2 of the present invention to attain the second object of the invention.

Fig. 15 is a sectional view of the main portion to illustrate of an 8mm-video tape cassette.

Fig. 16 is a sectional view taken on line II-II of Fig. 15.

Fig. 17 is an enlarged perspective view of the release portion of the release member.

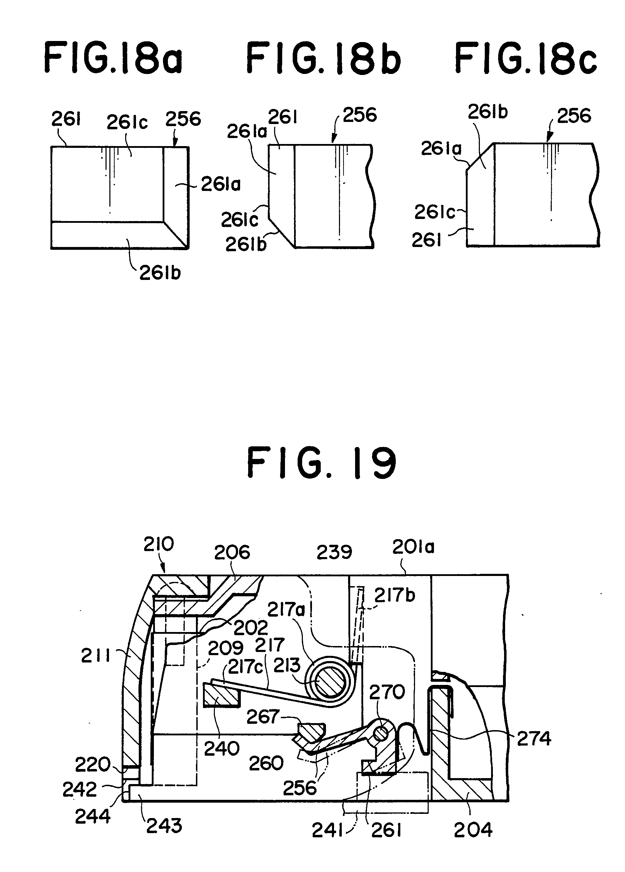

Fig. 18-a is the front view of the release portion illustrated in Fig. 17.

Fig. 18-b is the side view of the release portion illustrated in Fig.17.

Fig. 18c illustrates the bottom portion of the release portion shown in Fig. 17.

Fig. 19 is the sectional view of another example of a tape cassette, wherein the sectional view is taken in the same way as Fig. 16.

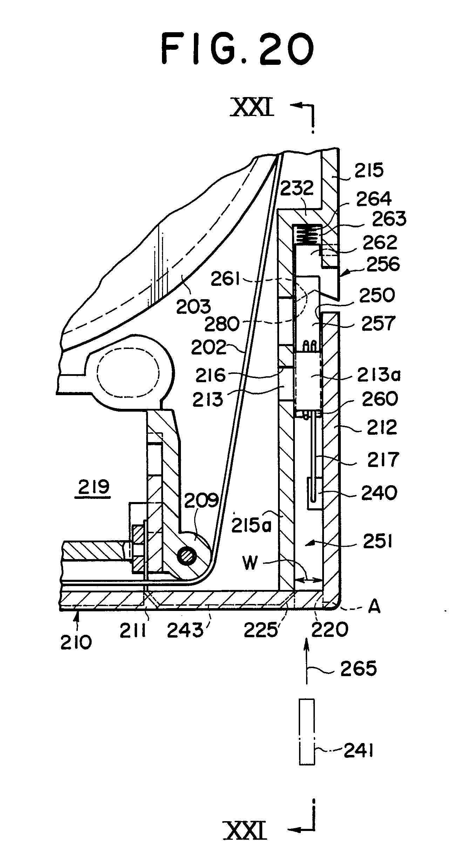

Fig. 20 is the sectional view of the main portion of another tape cassette for use of an 8mm-video.

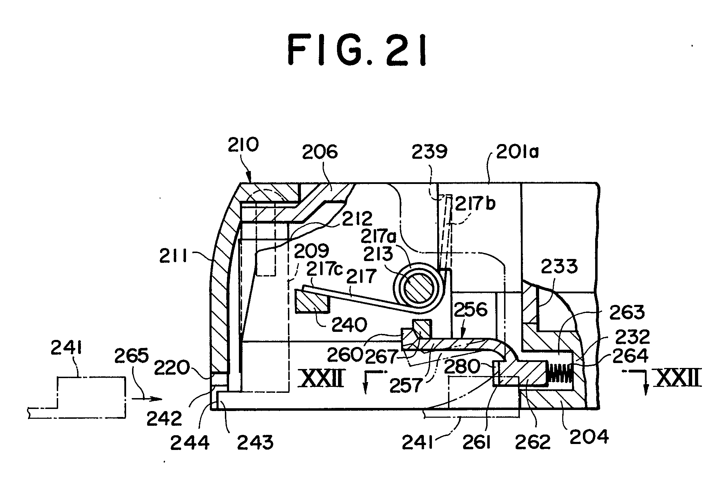

Fig. 21 is the sectional view taken on line VII-VII of Fig. 20.

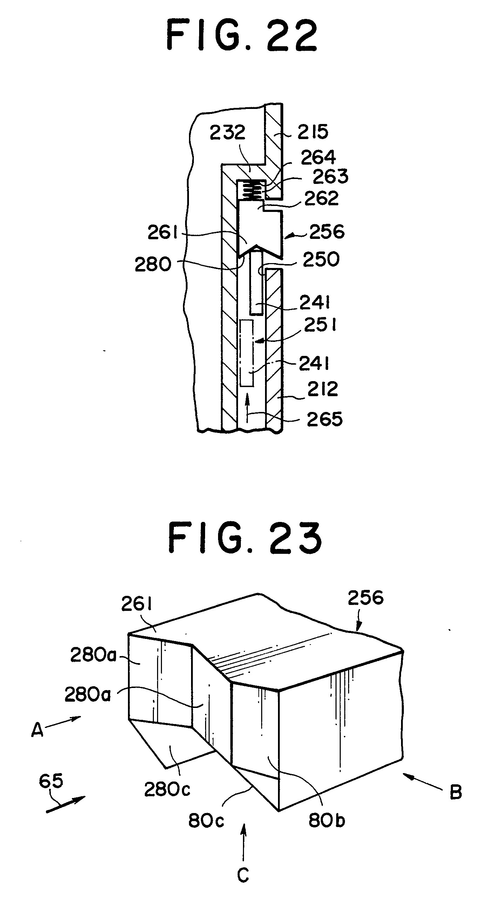

Fig. 22 is the sectional view taken on line VIII-VIII of Fig. 20.

Fig. 23 is the enlarged perspective view of the release portion of the release member.

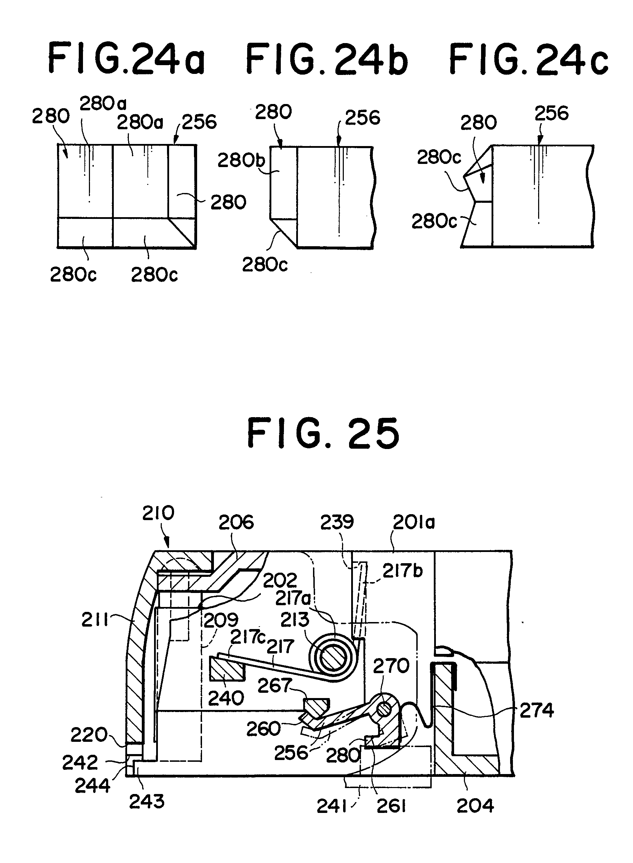

Fig. 24-a is the front view of the release portion shown in Fig. 21.

Fig. 24-b is the side view of the release portion shown in Fig. 21.

Fig. 24-c illustrates the bottom of the release portion shown in Fig. 21.

Fig. 25 is the sectional view of the tape cassette of another example, wherein the section is taken in the same way as Fig. 16.

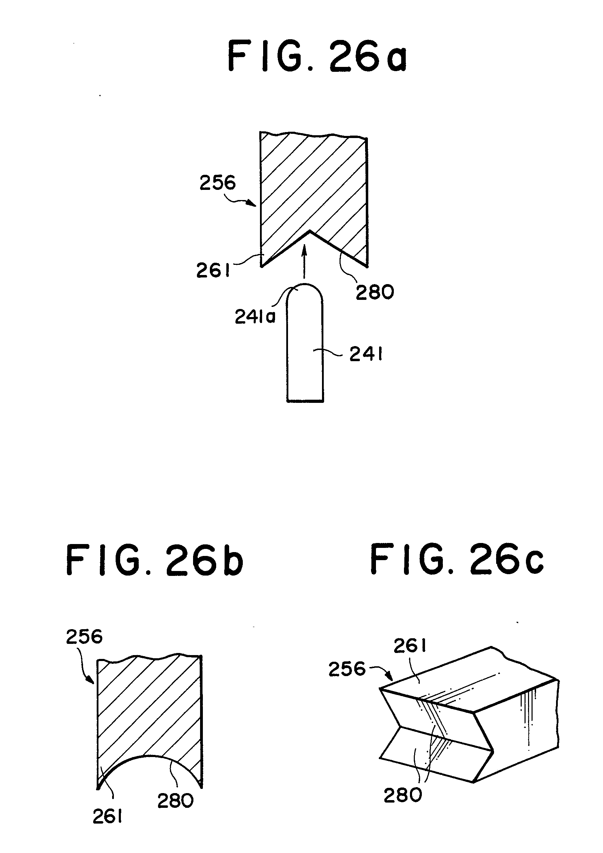

Fig. 26-a to Fig. 26-c are the sectional views and the perspective view of the release portion of the lock member.

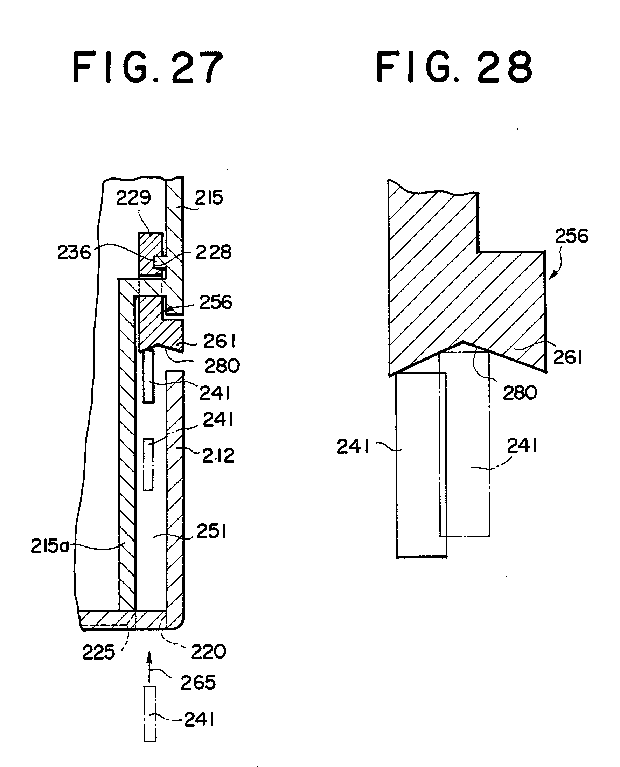

Fig. 27 is the sectional view of the main portion of the tape cassette of another example.

Fig. 28 is the fragmentary enlarged view of Fig. 27.

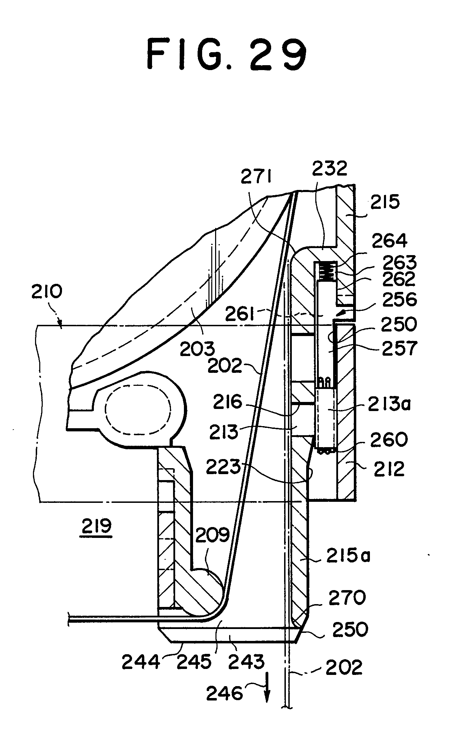

Fig. 29 illustrates Example 2-3 to attain the second object of the present invention, wherein the drawing is the same sectional view as Fig. 15 which shows the tape cassette after the tape has been drawn out.

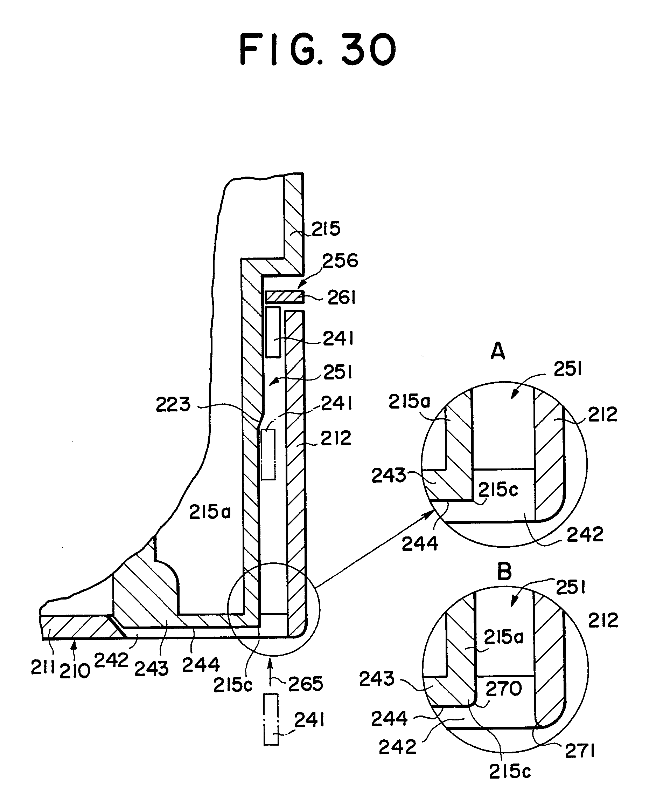

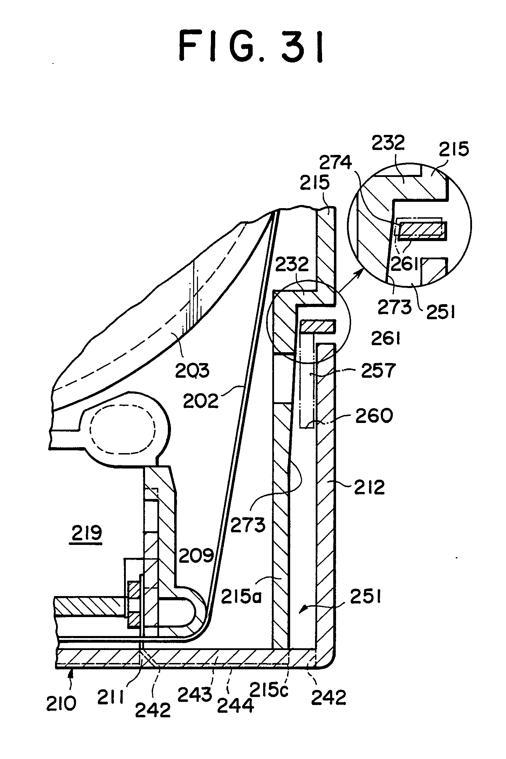

Fig. 30 and Fig. 31 illustrate Example 2-4 to attain the second object of the present invention.

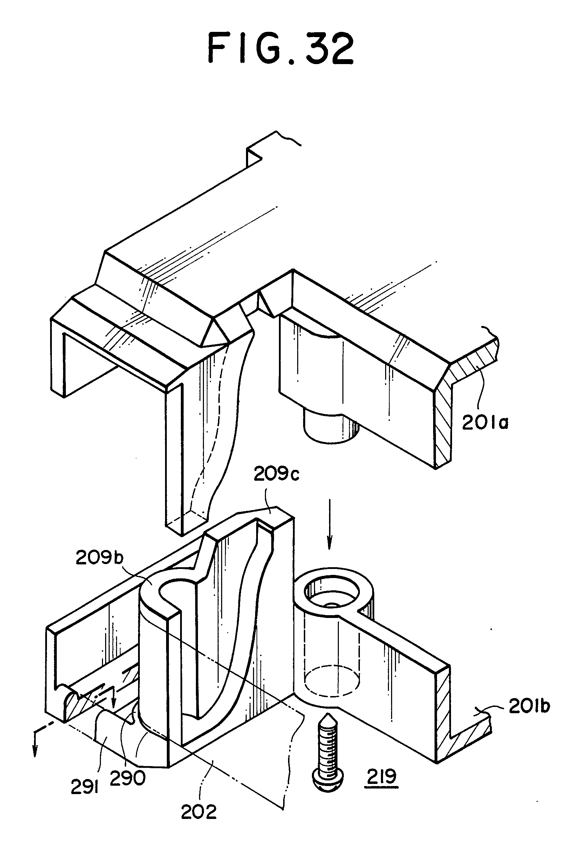

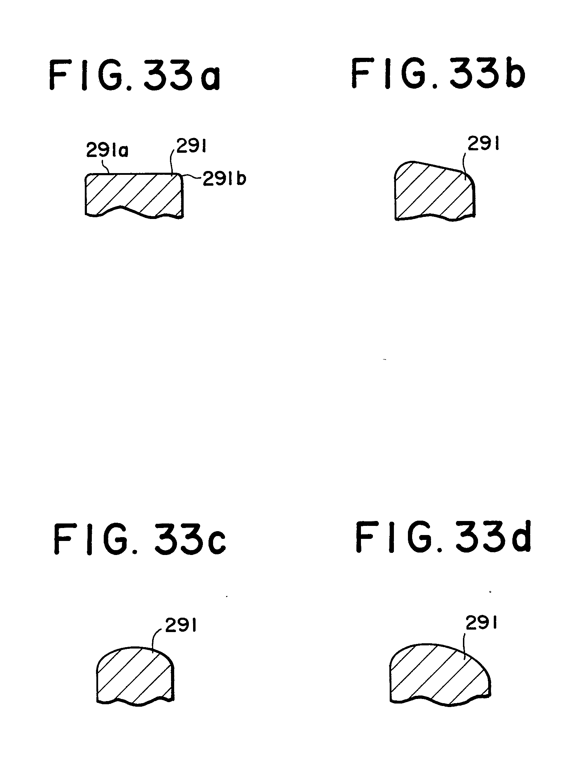

Fig. 32 and Fig. 33 illustrate an example of a magnetic tape cassette to attain the third object of the present invention.

Fig. 32 is a perspective view of the main portion of the cassette when the upper half case is removed.

Fig. 33-a, Fig. 33-b, Fig. 33-c, and Fig. 33-d are sectional views of the main portion of a tape cassette of another example of the invention.

Fig. 34 to Fig. 43 are drawings illustrating an example of a prior art tape cassette.

Fig. 34 is a perspective view of a tape cassette used for a 8mm-video recorder.

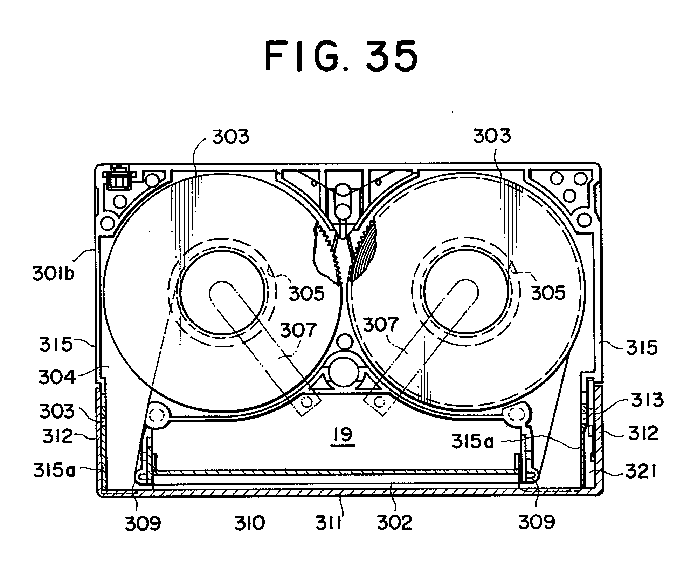

Fig. 35 is a sectional plan view of the tape cassette.

Fig. 36 is a sectional view of the main portion of the tape cassette.

Fig. 37 is a sectional view taken on line X-X of Fig. 36.

Fig. 38 and Fig. 39 are schematic illustrations of the front lid lock means of a prior art tape cassette.

Fig. 40, Fig. 41, and Fig. 42 illustrate the conventional tape cassette.

Fig. 40 and Fig. 42 are the fragmentary sectional views of the tape cassette.

Fig. 41 is the sectional view of the main portion of the tape cassette.

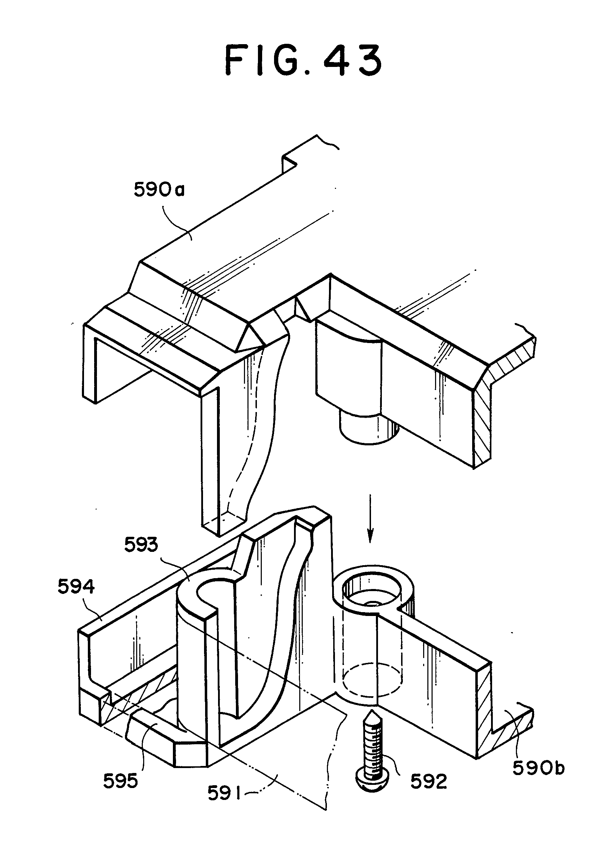

Fig. 43 is a schematic illustration of the tape guide of a prior art tape cassette.

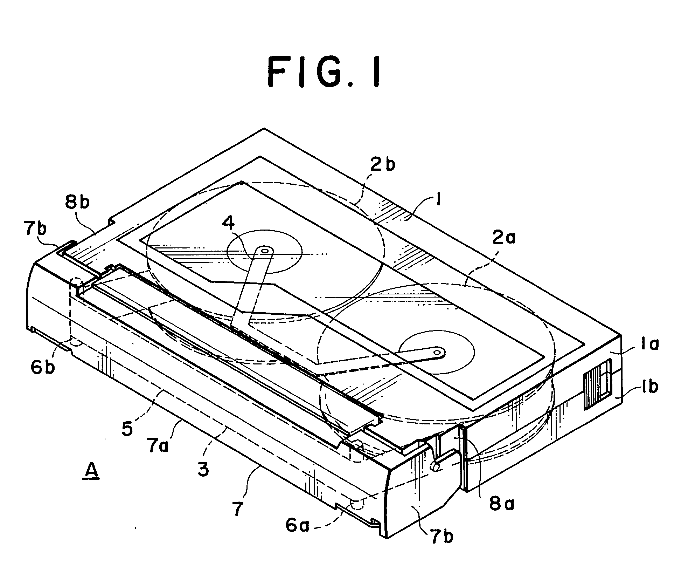

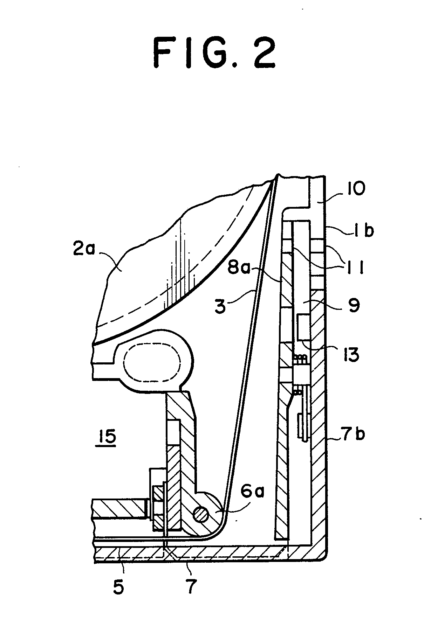

Fig. 1, Fig. 2, and Fig. 3 illustrate a tape cassette of the first example of the invention. Fig. 1 is a perspective view of the tape cassette. Fig. 2 is a partial schematic plan view of the lower half case of the tape cassette. Fig. 3 is a perspective view of the lock member of the tape cassette.

Referring to the drawings, and particularly to Fig. 1, the cassette housing 1 is composed of the rectangular upper half case 1a and the rectangular lower half case 1b which are made from synthetic resin such as polypropylene, ABS resin, or PS resin. The upper half case 1a and the lower half case 1b are engaged with each other being fastened by setscrews to integrally form a box-shaped cassette housing.

A pair of tape reels, the supply reel 2a and the take-up reel 2b, are rotatably provided in the cassette housing. A magnetic tape 3, which will be called a tape hereafter, is stretched between the supply reel 2a and the take-up reel 2b. The supply tape reel 2a and the take-up reel 2b are placed on the bottom plate of the lower half case 1b. The bottom portions of the supply reel 2a and the take-up reel 2b engage with the holes which are provided to the bottom plate of the lower half case for positioning. The numeral 4 represent leaf springs to hold a pair of tape reels 2a, 2b.

The front opening 5 is provided to the front of the cassette housing 1. The front opening 5 almost covers the whole front portion of the cassette housing. The bottom opening is provided to the bottom plate of the lower half case 1b, wherein the bottom opening continues to the front opening 5. (The tape loading member of the recording and playback equipment enters the pocket formed by the front opening 5 and the bottom opening in order to pull out the tape 3 from the cassette A.) A front wall is integrally provided on the bottom plate of the lower half case 1b along the edge of the bottom opening. The space in the cassette housing 1 is divided into two portions by the front wall, one is the space of the bottom opening side and the other is the space where the tape reels 2a, 2b are placed. A pair of tape guides 6a, 6b are mounted on both the right side edge and the left side edge of the front wall on the bottom plate of the lower half case 1b. The above-mentioned tape 3 is stretched along the front opening being guided by the tape guides 6a, 6b.

The front opening 5 is covered with the U-shaped front lid 7. This front lid 7 is made by molding from synthetic resin such as polypropylene, ABS resin and PS resin. The front lid 7 is composed of the front plate 7a which forms the front portion of the cassette housing 1, the connecting members 7b which are connected with the right side edge and the left side edge of the front plate 7a, and the pivotal clamping members which are provided to the inside of the connecting members 7b, wherein the pivotal clamping members face each other. The connecting members 7b engage with the cut-out portions 8a, 8b provided on both side walls. The above-described pivotal clamping members provided to the connecting members engage with holes which are provided in the cut-out portions 8a, 8b on the side walls of the cassette housing 1. In this way, the front lid 7a is rotatably pivoted to the cassette housing and it can be opened and closed around the pivotal clamping member.

In Fig. 1, the front lid 7 is pushed by a spring means such as a torsion spring and the like which is provided to the right side pivotal clamping member, for instance, so that the front lid is closed by the action of the spring. When the tape cassette A is not in use, the front lid 7 is closed to protect the tape 3. When the tape cassette A is put into a recording and playback equipment, the front lid 7 is opened and a tape loading member of the recording and playback equipment enters the pocket 15 formed in the front portion of the cassette housing 1 so that the tape 3 can be pulled out of the cassette housing 1.

A dust cover is rotatably pivoted to the inside of the front lid 7. When the tape cassette A is not used the tape 3 is covered with the dust cover. To describe in more detail, the upper opening and both sides of the pocket 15 are closed by the dust cover so that the tape 3 is not covered with dust which enters the pocket 15 from the upper and lower openings of the pocket. The dust cover engages with cam grooves provided to the right side and the left side walls which face the pocket 15. (The right side and the left side walls are connected with the tape guides 6a, 6b.) When the front lid 7 is opened, the dust cover is moved upward together with the front lid 7 without interfering with the tape 3. The dust cover is provided to the front plate 7a of the front lid 7 through mounting members which are placed on the right side and the left side of the front plate 7a. The dust cover is rotatably pivoted to the mounting members by pivotal clamping members which are protruded from the right side and the left side of the dust cover. Cam followers are provided to the right side and the left side close to the lower edge of the dust cover. The cam followers engage with the above-described cam grooves.

The right side wall and the left side wall of the pocket 15 to which the cam grooves are provided, are composed of the side walls which are mounted on the front portion of the upper plate of the upper half case 1a and the side walls 9 which are mounted on the bottom plate of the lower half case 1b being connected with the tape guides 6a, 6b. When the upper half case 1a and the lower half 1b are assembled, the rear side edge of the side wall which is mounted on the front portion of the upper plate of the upper half case 1a and the stepped front edge of the side wall which is mounted on the bottom plate of the lower half case 1b, face each other with a distance a little larger than the diameter of the cam follower. The rear side edge and the stepped front edge form the cam groove. A rectangular cut-out portion connected to the upper edge of the rear side edge surface of the side wall is formed on the upper plate of the upper half case 1a. When the cam groove is formed by assembling the upper half case 1a and the lower half case 1b, the cut-out portion is connected to the upper end of the cam groove. In other words, the upper end of the cam groove is opened to the upper surface of the upper half case 1a through the cut-out portion. The cam follower of the dust cover is moved through the cut-out portion and engages with the cam groove. The upper end edge of the stepped edge which forms the rear edge of the cam groove is chamfered. Even when the stepped edge slightly protrudes from the rear end edge of the cut-out portion due to manufacturing errors, the cam follower can smoothly slip into the cam groove through the chamfered portion and engage with the groove without being blocked by the upper end edge of the stepped edge.

As shown in Fig. 2 the spring means such as a torsion spring and the lock means to lock the closed lid when the tape cassette A is not used, are assembled into the space 9 which is formed between the front end cut-out portion 8a of the right side wall of the cassette housing 1 and the right side connecting member 7b of the front lid 7.

The numeral 10 is the side wall of the lower half case 1b. The semicircular cut-out portion 11 to be used for a bearing is provided to the side walls 10 which are placed on both sides of the space 9. (Although not shown in the drawing, the semicircular cut-out portion to be used for a bearing is also provided to the side wall of the upper half case 1a.)

The numeral 12 in Fig. 3-a is the lock member of the lock means of Example 1-1. This lock member 12 has the claw 12a, the shaft 12b, the resilient member 12c, and the tapered protrusion 12d which protrudes downward at the rear portion of the lock member 12, wherein the tapered surface is formed in at least two directions (X, Y) out of three directions (X, Y, Z). This lock member 12 is made from the predetermined plastic materials by monoblock molding.

The numeral 13 is a protrusion for engagement provided to the right side connecting member 7b of the front lid 7 engaging with the claw 12a of the lock member 12. The numeral 14 is a restricting member provided to the side wall of the upper half case 1a corresponding to the resilient member 12c of the lock member 12.

Accordingly, assembling work of the tape cassette is conducted as follows. After the shaft 12b of the lock member 12 has been set to the cut-out portion 11 formed in the side wall 10 of the lower half case 1b, the upper half case 1a is set on the lower half case 1b to form a cassette housing.

When the front lid 7 is mounted on the cassette housing 1, the lock member 12 is pushed to be rotated clockwise by the restricting member 14 as shown in Fig. 3-a. Therefore, the claw 12a of the lock member 12 engages with the protrusion 13 for engagement and the front lid 7 is locked. Unless the lock member is released, the front lid 7 can not be opened.

When tape cassette A is set to the recording and playback equipment, the release member (not shown in the drawing) of the equipment enters the cassette housing from X-direction, Y-direction, or Z-direction and the release member comes into contact with the tapered portion 12d of the lock member 12. The lock member 12 is rotated counterclockwise by the release member as shown in Fig. 3-b. Accordingly, the claw 12a of the lock member 12 is released from the engagement protrusion 13 of the front lid 7 and the front lid 7 is ready to be opened. Then, the front lid 7 is opened by the lid opening member of the recording and playback equipment and the tape loading member (not shown in the drawing) of the equipment enters the pocket formed in the front middle portion of the cassette housing 1 to pull out the tape 3 in the front direction of the cassette housing.

In the above-described tape cassette A, assembling work is conducted as follows. The shaft 12b of the lock member 12 is set to the cut-out portion 11 formed in the side wall 10 of the lower half case 1b as if the shaft 12 were dropped into the cut-out portion 11. After setting the shaft on the cut-out portion, the upper half case 1a is fixed to the lower half case 1b. When the upper half case is fixed to the lower half case, the lock member 12 is locked by the engagement protrusion 13 according to the action of the restricting member 14. In this way, the lock member 12 is assembled to the cassette housing 1. For that reason, assembling work of the lock member is so simple that the efficiency of tape cassette assembling work is very high.

The lock member 12 is made from plastic by monoblock molding to utilize the characteristics of plastic materials. Since the resilient member 12c is integrally provided to the lock member 12, the lock member 12 is pushed by the restricting member 14 in the locking direction. Accordingly, a part to push the lock member 12 such as a spring is not needed. As a result, the number of parts can be reduced and parts control is simplified.

Fig. 3-b is a schematic side view of the main portion (the lock member) of the tape cassette of the invention in the case of Example 1-2.

In the case of Example 1-1, the shaft 12b is integrally provided to the lock member 12 of the tape cassette. On the other hand, in the case of Example 1-2, the shaft to be used to rotate the lock member 12 is provided to the cassette housing 1 and the cut-out portion 12e is formed in the lock member 12, wherein the shaft is set to the cut-out portion of the lock member. Another structure of the lock member 12 of Example 1-2 is essentially the same as that of Example 1-1. Therefore, the detailed explanation is omitted.

In the case of the tape cassette of Example 1-2, the shaft to be used to rotate the lock member is not provided to the lock member 12. For that reason, the lock member 12 can be placed in the space 9 which is separated from the space in the tape cassette in which the supply reel 2a and the take-up reel 2b are placed. Accordingly, this tape cassette is characterized in that; the space in which the shaft of the lock member 12 is placed, is separated from the space in the cassette housing 1 in which the supply reel 2a and the take-up reel 2b are placed; as a result, abrasive powder which is produced by abrasion when the bearing and the shaft become worn, does not adhere to the tape surface; and the tape running efficiency is not decreased and dropout never occurs because the tape surface is kept smooth.

Fig. 3-c is a schematic side view of the main portion (the lock member) of the tape cassette of the invention in the case of Example 1-3.

In the tape cassette in Example 1-3, the claw 12f to prevent the shaft from coming off is provided to the cut-out portion 12e for bearing the lock member 12 of the tape cassette of Example 1-2. Since the structure is essentially the same as that of the tape cassette of Example 1-2, the detailed explanation is omitted.

Fig. 3-d is a schematic side view of the main portion (the lock member) of the tape cassette of the invention in the case of Example 1-4.

In the lock member of Example 1-4, the guide surface 12g is provided to the resilient member 12c so that the restricting member 14 can be guided by the guide surface 12g in the direction for the lock member 12 so as to be locked when the upper half 1a is set to the lower half case 1b.

The characteristics of the tape cassette of the invention will be described as follows.

The tape cassette of the present invention is composed of; a cassette housing; a supply reel and a take-up reel which are placed in the cassette housing; a tape which is stretched in a predetermined passage between the supply reel and the take-up reel; a front lid to protect the tape which is placed outside the cassette housing; a shaft or a bearing in the cassette housing to which a lock member of the lock means is provided; and a resilient member which is integrally provided to the lock member and which pushes the lock member in the locking direction together with a restricting member mounted on the cassette housing. Since the tape cassette of the invention has a simple lock means as described above, the lock member can be easily assembled to the cassette housing. Therefore, assembling work of the lock member is very simple and the tape cassette assembling efficiency is remarkably high. Furthermore, a pushing member is integrally provided to the lock member, wherein the characteristics of materials are effectively utilized. Accordingly, another part such as a spring to push the lock member is not needed in the tape cassette of the invention and the number of parts can be reduced. As a result, parts control of the tape cassette of the invention is simplified.

One of the variations of the example to attain the object of the invention will be described as follows.

Referring to Fig. 4-a, a lock means is illustrated, which is Example 1-5 of the invention. The lock means of this example is composed of the lock member 29 made from plastic by integral molding, the cut-out portion 20a provided to the upper end of the side wall of the lower half case 1b, and the engagement portion 21 provided to the inside of the connecting member 7b of the front lid 7, wherein the engagement portion 21 engages with the claw 29e of the lock member 29. Furthermore, the lock member 29 is composed of; the mount 29a the shape of which is a rectangular parallelepiped; the spring portion 29b the shape of which is flat ; the Y-shaped leg portions 29c, 29b; and the claw 29e which is provided to the tip of the leg 29c.

Both sides of the mount 29a of the lock member 29 are set to the cut-out portions 20a, 20b which are provided to the upper end of the side wall of the lower half case 1b. When the front lid is opened, the claw 29e of the lock member 29 engages with the receiving protruded portion 21 protruded from the inside of the connecting member 7b of the front lid 7 to lock the front lid 7.

When tape cassette A is set to the recording and playback equipment, the release member (not shown in the drawing) of the equipment enters the cassette housing 1 and the release member rotates the leg portion 29d, which is to release the lock member 29, counterclockwise resisting the force of the spring portion 29b. According to this action, the claw 29c of the lock member 29 is released from the receiving protruded portion 21 of the front lid 7 and the front lid can be opened. Accordingly, the front lid 7 is rotated clockwise, referring to Fig.1 by the action of the lid opening member (not shown in the drawing) of the recording and playback equipment. At the same moment the tape loading member (not shown in the drawing) of the equipment enters the pocket formed in the front portion of the cassette housing 1 to pull out the tape 3 toward the front of the tape cassette.

In the tape cassette described above, even when the front lid 7 is repeatedly opened and closed and the lock member 29 is rotated each time, the mount 29a of the lock member 29, the shape of which is a rectangular parallelepiped, is fixed to the cassette housing 1. Therefore, abrasion between the lock member 29 and the cut-out portions 20a, 20b provided to the upper end of the side wall of the lower half case 1b, never occurs. Accordingly, problems will not be caused such as: abrasive powder being scattered in the cassette housing and adhering to the tape surface; the tape surface becoming less smooth and running efficiency of the tape is lowered; and dropout caused when the tape is played.

The lock member 29 can be assembled into the cassette housing 1 only by setting the mount 29a of the lock member 29 to the cut-out portions 20a, 20b formed in the side wall of the lower half case 1b and then providing the upper half case 1a to the lower half case 1b. Therefore, assembling the lock member 29 into the cassette housing 1 is very simple and tape cassette assembling efficiency is remarkably high.

The spring portion 29b which is integrally formed by utilizing the characteristics of materials, is provided to the lock member 29. In other words, the spring portion 29b is integrally molded. Accordingly, another parts such as a spring and the like to push the lock member in a prescribed direction are not necessary and the number of parts can be reduced. Therefore, parts control becomes easy.

Fig. 4-c is a schematic side view of the main portion (the lock member) of a tape cassette of the invention in the case of Example 1-6.

The tape cassette of Example 1-6 is essentially the same as that of Example 1-5 in terms of the technological concept except for the shape of the mount 29a of the lock member 29 and the shape of the spring portion 29b. Accordingly, the detailed explanation about the tape cassette of Example 1-6 is omitted.

Fig. 4-d is a schematic side view of the main portion (the lock member) of a cassette tape of the invention in the case of Example 1-7.

The tape cassette of Example 1-7 is essentially the same as that of Example 1-5 in terms of the technological concept except for the shape of the mount 29b of the lock member 29 and so forth. Accordingly, the detailed explanation about the tape cassette of Example 1-7 is omitted.

Fig. 4-e is a schematic side view of the main portion (the lock member) of a tape cassette of the invention in the case of Example 1-8.

The tape cassette of Example 1-8 is essentially the same as that of Example 1-5 in terms of the technological concept except for the shape of the mount 29a of the lock member 29 and so forth. Accordingly, the detailed explanation about the tape cassette of Example 1-8 is omitted.

In the above-described examples, all lock members 29 are made from plastic. However, the spring portion 29b can be made of a metal sheet such as a stainless steel sheet, and the lock member 29 can be made by the method of insert forming.

The characteristics of the tape cassette of the invention will be described as follows.

The tape cassette of the present invention is composed of; a cassette housing which consists of an upper half case and a lower half case; a front lid which is rotatably pivoted to the cassette housing; a receiving protruded portion provided to the front lid; and a lock member to which a mount fixed to a noncircular cut-out portion formed in the upper half case and/or the lower half case, a spring portion formed on the tip side of the mount, and an engaging portion to be engaged with a receiving protruded portion of the front lid, are integrally provided, wherein the mount of the lock member is installed on the noncircular cut-out portion formed in the upper half case and/or the lower half case. Since the front lid is locked by the lock member the structure of which is described above, the mount of the lock member is fixed even when the front lid is repeatedly opened and closed and the lock member is rotated in accordance with the opening and closing motion of the front lid. Accordingly, abrasion between the lock member and the cassette case never occurs. Therefore, problems will not be caused such as: abrasive powder being scattered in the cassette housing and adhering to the tape surface; the tape surface becoming less smooth and the tape running efficiency is lowered; and dropout caused when the tape is played. The lock member is easily assembled into the cassette housing and the assembling work is very simple. To go into details, after the lock member is snapped into the cut-out portion formed, for instance, in the lower half case, the upper half case is mounted on the lower half case. The lock member is assembled into the cassette housing in the simple way described above and all the assembling work is completed. For that reason, the tape cassette assembling work efficiency is very high. Furthermore, since the lock member has an integral spring portion, another part such as a spring to push the lock member are unnecessary and the number of parts can be reduced. Accordingly, it is easy to control the parts of the tape cassette in the manufacturing process.

Another of the variations of the example to attain the first object of the invention will be described as follows.

Example 1-9 of the invention is illustrated in Fig. 5, Fig. 6-a, and Fig. 6-b. As shown in Fig. 6-a, the lock means of this example is composed of the lock member 49, the support 10 which is protruded from the bottom of the lower half case 1b and fixed to the cut-out portion 49f of the lock member 49, and the receiving protruded portion 21 which is provided to the inside of the connecting member 7b of the front lid 7, wherein the front lid 7 is engaged with the claw 49d of the lock member 49. The lock member 49 which is made from plastic by monoblock molding is provided with; the spring portion 49a the shape of which is flat; the Y-shaped leg portions 49b, 49c which are mounted on the tip of the spring portion 49a; the claw 49d which is formed at the tip of one leg of 49b; the lever 49e which is provided to the back of the spring portion 49a meeting at right angles with it; and the cut-out portion 49f which is formed on the lower surface of the base 49e.

The lock member 49 is mounted on the support 10 which is provided to the bottom of lower half case 1b as described above. When the front lid 7 is closed, the claw 49d of the lock member 49 engages with the receiving protruded portion 21 protruded from the inside of the connecting member 7b of the front lid 7.

When tape cassette A is set to the recording and playback equipment, the release member provided to the device (not illustrated in the drawing) enters the cassette housing and moves the leg portion 49c counterclockwise in Fig. 6-a to release the lock, resisting the force of the spring portion 49a. When the leg portion 49c is moved counterclockwise, the claw 49d of the lock member 49 is released from the receiving protruded portion 21 of the front lid 7 and the front lid 7 can be opened. As described above, the front lid 7 is opened clockwise in Fig. 1 by the action of the release member provided to the recording and playback equipment, and the tape loading member (not illustrated in the drawing) provided to the recording and playback equipment enters the pocket formed in the front portion of the cassette housing 1 to pull out the tape 3 in the front direction.

In tape cassette A described above, the lock member 49 is bent each time the front lid 7 is opened and closed. Since the lock member 49 is well balanced with regard to its center, the lock member 49 is not twisted even when bending force is added to it. Accordingly, the lock member 49 surface never inclines with regard to the connecting member 7b of the front lid 7. Therefore, the receiving protruded portion 21 of the front lid 7 can be surely locked by the claw 49d of the lock member 49. Consequently, the front lid can be positively locked.

The cut-out portion 49f of the lock member 49 is formed in a manner such that the cut-out portion covers the whole thickness of the lock member 49 and the support 10 is made in accordance with the shape of the cut-out portion. As a result the lock member 49 is strongly supported by the support 10 and the lock member never comes off from the support.

Since the lock member 49 is fixed to the cassette housing 1 through the cut-out portion 49f formed on the lower surface of the lever 49e and through the support 10, rubbing can not be caused between the lock member 49 and the cassette housing 1. As a result, abrasion between the lock member 49 and the cassette housing 1 is not caused when the front lid is unlocked. For that reason, problems are avoided in the tape cassette such as; abrasive powder scattered in the cassette housing 1, adhering to the tape 3 surface; the running efficiency is lowered because the tape surface becomes rough due to the adhered abrasive powder; and dropout caused when the tape is played.

When the cassette tape is assembled, the lock member 49 is placed so that the cut-out portion 49f can be fitted to the support 10. After the cut-out portion 49f was fitted to the support 10, the lock member 49 does not come off from the support even if rather strong force is given to the lock member 49 and thence the manufacturing and assembly of tape cassette A is very simple. As a result, the assembling efficiency of tape cassette A is remarkably high.

The lock member 49 is integrally provided with the spring portion 49a, wherein the characteristics of the material are utilized to make the lock member 49. Consequently, separate parts such as a spring to push the lock member 49 in the predetermined direction, are not necessary. Accordingly, the number of parts can be reduced and parts control can be easily conducted.

In the example described above, the whole of the lock member 49 is made from plastic. The lock member 49 may be made from plastic and a metal sheet such as a stainless steel sheet by the method of insert molding.

In the example described above, the cut-out portion 49f at which the lock member 49 is supported by the support 10, is formed on the lower surface of the lever 49e. The cut-out portion 49f may be provided on the back of the lever 49e or on the upper surface of the lever 49e, wherein the cut-out portion 49f may not be provided on the right and left side of the lever 49e which is parallel with the connecting member 7b on which the receiving protruded portion 21 of the front lid 7 is provided. In the example, the support 10 is provided to the bottom plate of the lower half case 1b. It may be provided to the upper plate of the upper half case 1a or to the side wall of the lower half case 1b. Furthermore, the support 10 can be the side wall of the cassette housing itself. (The side wall is indicated by the numeral 10 in Fig. 5. Furthermore, two side walls can be provided and they can be the support.) It can be understood that the invention is not limited to the above-described example. In other words, the structure of the lock member 49 and the support 10 of the invention is described as follows. A receiving supported portion such as a cut-out portion (a protruded portion) is provided on the wall of the lock member 49 at a well balanced position with regard to the center surface of the lock member 49 the shape of which is like a sheet. The support portion such as a protruded portion (a cut-out portion) is provided to the cassette housing 1, wherein the support portion faces the receiving supported portion.

The support portion composed of the cut-out portion 49f of the lock member 49 and the support 10 can be provided to two positions, one is on the front side of the spring portion 49a and the other is on the rear side. The shape of the cut-out portion 49f may be a reverse trapezoid instead of a hexagon illustrated in Fig 6-a. Furthermore, the structure illustrated in Fig. 6-b may be adopted.

It is preferable that the receiving supported portion such as the cut-out portion 49f is provided in such a manner that the cut-out portion covers the whole of the lock member 49 thickness.

The characteristics of the cassette tape of the present invention will be described as follows.

The tape cassette of the invention comprise; a cassette housing; a front lid is rotatably pivoted to the cassette housing, wherein the front lid can be opened and closed; a receiving protruded portion provided to the front lid; and a lock member provided with a lock portion which engages with the receiving protruded portion and provided with a release portion. A receiving supported portion of the lock member is provided on a wall of the lock member which is at right angles with the surface in which lock member release motion is conducted. A support portion is provided to the cassette housing, wherein the support portion faces the receiving supported portion of the lock member. The lock member is firmly mounted on the cassette housing by the support portion and the receiving supported portion. Even when the front lid is repeatedly opened and closed and the lock member is displaced each time, the lock member is fixed to the support. Accordingly, abrasion between the lock member and the cassette housing is not caused. Therefore, problems are not caused such as; abrasive powder is scattered in the cassette housing and the scattered abrasive powder adheres to the tape surface; the tape running efficiency is lowered because the tape surface becomes rough due to the adhered abrasive powder; and dropout caused when the tape is played back. Since the lock member is well balanced, the lock member is not twisted with regard to the front lid when the front lid is opened and closed. Therefore, the lock portion of the lock member can positively engage with the receiving protruded portion of the front lid. The assembly of the cassette housing is completed by fitting the receiving supported portion of the lock member to the support portion of the cassette housing. Consequently, the assembly is very simple and the assembling efficiency of the tape cassette is remarkably high. Furthermore, since the lock member is not rotatably pivoted, no shaft is needed for the lock member. Accordingly, the lock member can be installed even in a small space. As a result, the tape cassette can be easily made compact.

Another of the variations of the example to attain the first object of the invention will be further described as follows.

Fig. 7-a illustrates Example 1-10. In Fig. 7-a, the spring means is composed of the leaf spring 39 which is made of, for instance, a stainless steel sheet. It can be clearly understood from Fig. 7-a and Fig. 7-b that one end 39a of the spring 39 is formed into a loop and the spring end 39a is provided to a slit formed in the shaft 7c of the front lid 7.

The other end 39b of the leaf spring 39 is bent to form the engaging portion 39c.

The tapered portion 39d is formed at the tip of the end 39b.

The numeral 30 is a protrusion which is provided to the cassette housing 1, as occasion demands, protruding into the space between the outside wall of the cassette housing 1 and the inner surface of the connecting member 7b of the front lid 7. When one end 39a of the leaf spring 39 is mounted in the slit of the shaft 7c of the front lid 7, the middle portion 39e of the leaf spring 39 comes into contact with the protrusion 30 and the front lid 7 is always pushed in the direction of closing (counterclockwise in Fig. 7-a), wherein the protrusion 30 is used as a fulcrum.

To go into more details, in Fig. 7-a, the shaft 7c of the front lid 7 is enforced by the leaf spring 39 to rotate in the direction of closing since the half portion of the leaf spring 39, which is placed on the end 39a side with regard to the protrusion 30, returns counterclockwise. In Fig. 7-a, the receiving protruded portion 31 provided to the cassette housing 1 is pushed by the engaging portion 39c of the leaf spring 39 since the half portion of the leaf spring 39, which is placed on the other end 39b side with regard to the protrusion 30, returns clockwise. In this way, the front lid 7 is usually enforced to close by the action of the leaf spring 39 and at the same time it is locked.

The numeral 32 is a hole to detect the tape end, wherein the hole is provided to the front lid 7.

As shown in Fig. 7-a and Fig. 7-b, the protrusion 32a which protrudes inside may be provided to the peripheral portion of the hole 32. When the front lid 7 is opened as shown in Fig. 7-b, the protrusion 32a pushes the leaf spring 39 to prevent the leaf spring 39 from covering the hole 32.

Referring to Fig. 7-a, when tape cassette A is set to the recording and playback equipment, the release member 33 of the equipment enters cassette A and moves the other end 39b of of the leaf spring 39. As a result, the receiving protruded portion 31 of the cassette housing 1 is released from the engaging portion 39c of the leaf spring 39 and the front lid 7 can be opened. Consequently, as shown in Fig. 7-b, the front lid 7 is opened by the lid opening member (not shown in the drawing) provided to the recording and playback equipment. At the same moment, the tape loading member (not shown in the drawing) provided to the recording and playback equipment enters the pocket 15 formed in the front portion of the cassette housing 1 to pull out the tape 3 in the front direction of the cassette housing 1.

In the tape cassette A of the prior art, the pushing means to close the front lid and the lock means are composed of members which are independent of each other. On the other hand, in the tape cassette of the example described above, the pushing means to close the front lid and the lock means are combined integrally and composed of only one leaf spring 39. Consequently the number of parts can be reduced, the costs of parts can be cut down, and parts control can be easily conducted.

The leaf spring 39 which composes the pushing means to close the front lid 7 and the lock means, can be easily assembled. The assembly is conducted as follows. One end of the leaf spring 39 is inserted into the slit of the shaft 7c of the front lid 7 and the other end of the leaf spring 39 is provided to the cassette housing 1. The assembly of the tape cassette is very simple.

Since the leaf spring 39 is provided with the tapered portion 39d, the engaging portion 39c of the leaf spring 39 can be positively released from the receiving protruded portion 31 by the action of the release member 33 of the recording and playback equipment.

As shown in Fig. 7-c, the engaging portion 39c of the leaf spring 39 is preferably composed of a sharply angled portion so as to positively lock the front lid 7.

When the circular arc portion 31a to guide the leaf spring 39 is provided to the receiving protruded portion 31, the locked leaf spring can be smoothly released and furthermore the released leaf spring can be smoothly locked.

The engaging portion 39c of the leaf spring 39 may be replaced by a piece of plastic material 39f which is fixed to the leaf spring 39 as shown in Fig. 7-d.

Example 1-11 is illustrated in Fig. 8-a and Fig. 8-b. In Example 1-11, the leaf spring guide member 34 is provided to the upper half case 1a and the lower half case 1b in order to position the leaf spring 39 properly. In this case, the guide member 34 provided to the lower half case 1b is combining the protrusion 30 and the receiving protruded portion 31 of Example 1-9.

The characteristics of the tape cassette of the invention will be described as follows.

The tape cassette of the invention is composed of; a cassette housing; a rotatable front lid which is provided to the cassette housing; a receiving protruded portion which is provided to the cassette housing; and a spring member one end of which is fixed to the front lid and the other end of which is provided with an engaging portion. The front lid is forced to close by the spring member and the engaging portion engages with the receiving protruded portion to lock the front lid. When the spring member is moved and the engaging portion is released from the receiving protruded portion, the front lid can be opened. Accordingly, the spring means forcing the front lid to close and the lock means can be combined into one member. The front lid can be enforced to close and locked by the combined member. As a result, the number of parts can be reduced, the costs of parts can be cut down, and parts control can be easily conducted. The spring member forcing the front lid to close and the lock member can be easily assembled into the cassette housing. The assembly of the tape cassette is simple.

The example to attain the second object of the present invention will be described as follows.

Fig. 9 to Fig. 12 illustrate Example 2-1 in which the present invention is applied to an 8mm-video tape cassette.

Example 2-1 is essentially different from the tape cassette of the prior art. The release member 161 of the recording and playback equipment is inserted upward from the lower side of the cassette housing as indicated by the arrow mark 75 in Fig. 9 to push the lock release portion 131 of the lock member 126. The ramp 163 is formed on the cassette side wall 115a in such a way that the gap 121 is wide on the lower side 121c of the cassette housing and narrow on the lock release portion 131 side, wherein the gradient of the ramp 163 is linear.

Referring to Fig. 12-a, the cassette housing has the structure described above. When the release member 161 enters the cassette housing from the lower side of the cassette housing to the upper side as indicated by the arrow mark 175 in Fig. 12-a, the release member 161 is smoothly inserted into the gap 121 because the gap 121 is broad on the lower side of the cassette housing. Even when the release member 161 deviates from the proper course, it can be properly guided by the ramp 163 to the proper course to come into contact with the the release portion 131 of the cassette housing. Consequently, as illustrated by a dotted line in Fig. 11, the lock member 126 is elastically deformed in a positive way and the front lid 110 can be smoothly locked.

Fig. 12-b, Fig. 12-c, Fig. 12-d, and Fig. 12-e illustrate the gap 121 different from that illustrated in Fig. 12-a.

Fig. 12-b illustrates an example in which the ramp 163 extends to the lower edge of the cassette housing. Fig. 12-c illustrates an example in which the ramp 163 further extends to a higher position than the release portion 131 of the cassette housing. In the latter example, the release member 161 more positively comes into contact with the release portion 131 of the cassette housing. In the example illustrated in Fig. 12-d, the width of the lower portion of the gap 121 is the same as that of the upper portion. Accordingly, this wide portion 121 can easily accept various release members 161 and the upper narrow portion 121d can easily come into contact with the release member 131. In the example illustrated in Fig. 12-e, at least one of the edges, one is the edge 143a of the cassette protruded member 143 and the other is the lower edge 112a of the front lid side wall 112, is chamfered, wherein both edges face each other. An example in which both edges are chamfered is illustrated in Fig.10-e. The object of this example is to guide the release member 161 smoothly when it enters the gap 121. The corner 115b close to the release portion 131 may be chamfered as illustrated by the broken line 115b.

Another example is illustrated in Fig. 13.

The ramp 123 which is similar to that explained in Fig. 36 and Fig. 37 is formed in the vertical direction and the ramp 163 described before are provided to the tape cassette in this example. Due to the ramp 163, the release member 161 can smoothly enter the cassette housing from the lower side as described in Fig. 11 and due to the ramp 123, the release member 141 can smoothly enter the cassette housing from the front side. Accordingly, this type of tape cassette is suitable to various kinds of releasing mechanisms provided in the recording and playback equipment. When the release member 141 enters the cassette housing from the front side as shown by the arrow mark 165, the release member 141 is smoothly guided into the gap 121 by the ramp 125 provided to the cassette housing at the cut-out portion 120.

Fig. 14-a illustrates an example in which the ramp 183 corresponding to the above-described ramp 163 is provided to the front lid side wall 112. Fig. 14-b illustrates an example in which the ramps 163, 183 are provided to the side wall 115a and the the front lid side wall 112. In this example, the release member 161 provided to the recording and playback equipment can easily enter the cassette housing from the lower side of the cassette and positively come into contact with the release portion 131 of the cassette. In the example illustrated in Fig. 14-b, the release member 161 is positively guided to the release portion 131 by the ramps 163, 183, even if the release member 161 deviates to the right side or left side.

Some of the examples of the invention are described above. It is possible to show other variations based on the technological concept of the invention.

For instance, the shape and position of the ramps 163, 183 provided to the gap 121 may be varied. The shape of the ramp may be a flat surface, curved or a shape combining a flat surface with a curve. The ramp may be provided only to the position where the release member exists. The shape of the release portion of the lock member may be varied. The condition on which the release member comes into contact with the release portion of the lock member may be varied. The shape of the lock member and the lock mechanism may be changed. In the above-described example, the lock member 126 and the front lid pushing spring 117 are provided separately. Other than that, the front lid pushing spring may be connected with the lock member and the lock member may be pushed to the lock position by the spring as disclosed in Japanese Patent Publication No. 36054/1988. The motion and the kind of the lock member and and its peripheral members may be changed. The shape of the release member provided to the recording and playback equipment may be changed. The moving direction of the release member may be also changed. The release member may enter the cassette housing from various directions according to the direction of the ramp 163.

In the present invention, the gap into which the release member is inserted is wide on the lower side of the cassette housing and narrow on the release portion side. As a result, when the release member is inserted from the lower side of the cassette housing to the upper side, the release member enters the cassette smoothly from the lower side and is guided by the ramps to come into contact with the release portion of the lock member. Consequently, the lock member is smoothly released by the release member from the lower side of the cassette housing.

Fig. 15 and 16 show Example 2-2 for realizing the second object of the present invention.

In the case of the present example, entirely unlike the previously described conventional cases, the slit-shape gap 251 (221 in a conventional case) maintains an almost equal width W for the portion of the gap ranging from the position of the cut-out portion 220 on the side of the front face of the cassette to the innermost portion 250 of said cassette. Said width W may be within 1.0 - 2.0 mm (preferably within 1.2 - 1.8 mm) but may also be determined depending on the size of the release member 241. Here, "an almost equal width" means a completely equal width and the width including the allowable error occurring in the design process. Thus, in this example, unlike the conventional case, the outside surface of the side wall 215a of the case does not have any unevenness such as the steps and thus is available as a flat surface extending in both the frontward and rearward directions in parallel with the side wall 212 of the front lid 210 which is parallelly facing said side wall 215-a.

The lock member 256 of the front lid 210 is slidable in both the frontward and backward directions unlike the case of the conventional lock member. More particularly, the sliding portion 262 including the pressed portion 261, which contacts with the release member 241, is coupled with one end (front end) of the coil spring 264 the other end of which is fixed into the cut-out portion 263 provided on the wall portion 232 of the case, and the elastically deformable flat plate portion 257 is integrally provided on the top of said sliding portion, while the engagement claw 260 engages with the engagement portion 267 of the wall portion 212 of the front lid. As shown in Fig. 15, the lock member 256 (especially the pressed portion 261 of which) is not only larger than the gap 251 but also formed so as not to protrude from the side surface of the cassette.

Composed as described above, as shown in Figs. 15 and 16, the release member 241 is inserted into the gap 251 through the cut-out portion 220 all the way until coming into contact with the pressed portion 261 of the lock member 256. Thus, the release member 241 depresses the spring 264 to force the sliding portion 262 to slide in the direction of the arrow 265, and, simultaneously, the elastically deformable flat plate portion 257 is deformed as indicated by the dotted line to release the engagement claw 260 from the engagement portion 267, whereby the lock is released.

Thus, the release member 241 can be smoothly inserted to the position of the lock member without being disturbed by coming into contact with the side walls of the case and the front lid. In this case, even if the release member contacts said side walls, the side walls rather serve as the guides for the release member. Furthermore, since the release member does not contact with said side walls, the swarf or dust due to the abrasion will not be produced from the side walls, thereby the above-mentioned dropout can be eliminated.

Besides, the lock member 256 is not located inside the case (or on the side of the tape 202) but outside the case (or outside the side wall 215a), so that the inside of the case can be free of the undesirable influence of the action of said release member such as the dust entering the case.

Furthermore, since the release member 241 is smoothly guided into the gap 251 by the ramp 225, which is provided to the case, at the position of the cut-out portion 220, the release member can be positively inserted into the cassette housing. For the lock member 256, the size (or width) of the pressed portion 261 is formed to be larger than the width of the lock release member 241 or the width W of the gap 251, so that the lock release member 241 will be able to have an adequate contact area to realize stable unlocking performance. Being of aforesaid slide type, the lock member 256 enables the easy installation and sure reciprocating action at the time of the locking and unlocking. The operation of locking the front lid will be explained as follows. When the force given by the release member 241, which is at the position indicated by a dotted line in Fig. 16, is removed, the sliding portion 262 slides forward due to the recovering force of the spring 264 and the engagement claw 260 simultaneously returns clockwise to engage with the engagement portion 267.

There is a preferable shape for the pressed portion 261 (or the release portion) of the lock member 256. For instance, as shown in Figs. 17 and 18, the pressed portion 261 may be provided with the inclined surfaces 261a and 261b in the three directions including the direction of the advance 265 (or A direction) of the lock release member, that is, in each of the A, B and C directions. In the examples shown in Figs. 15 and 16, the vertical surface 261 actually functions as the pressed portion, but, in the case of the rotary type lock member, which will be described later, the existence of the inclined surfaces 261a and 261b is convenient, since the existence of said inclined surfaces enables the release member to enter the cassette housing from any one of said three directions. The details of this mechanism will be described later.

Further, said lock release member 261 will not protrude from the side surface of the cassette, so that there is no possibility that the release member 261 is unexpectedly caught by the side surface of the cassette to cause the erroneous action.

Fig. 19 shows an example wherein the lock member 256 is of a rotary type.

In this example, the lock member 256 is mounted on the rotary shaft 270 so as to be rotatable in the gap 251 along the lateral inside surfaces of the cassette and forced to rotate clockwise by the leaf spring 274 installed on the wall 204 while the rotary position is regulated by the engagement portion 267.

In the locked condition, the lock release member 241 enters said gap 251 until coming into contact with the release portion 261 of the lock member 256 to cause the lock member 256 to rotate against the force of the leaf spring 274 as indicated by the dotted line, whereby the engagement between the protrusion 267 of the front lid 212 and the engagement end 260 of the lock member 256 can be released.

In this example, said members and portions are similar to those used in the examples shown in Figs. 15 and 16 as the constituents of the cassette except that the lock member is of a rotary type. As described in reference to Figs. 17 and 18, the counterclockwise rotation (direction for re lease) of the lock member can be made easier where the pressed portion 261 of the lock member is provided with said inclined surface 261b so that the lock release member 241 comes into contact with said inclined surface.

Figs. 20 through 22 show another example of the present invention.

According to the example, unlike the cases of the previously described examples, the cut-out portion 280 opening wider toward the front and having a triangular cross section to serve as the surface to contact (or to receive) the release member 241 is provided to the release portion (pressed portion) 261 of the lock member 256 of the front lid, and the width W of the slit-shape gap 251 (221 in the case of the conventional example) is maintained almost equal throughout the portion ranging from the position of the cut-out portion 220 on the front side of the cassette to the innermost portion 250. Said width of the gap may be within 1.0 - 2.0 mm (preferably within 1.2 - 1.8 mm) similarly to the aforesaid case.

Composed as described above, as shown in Figs. 20 through 22, the release member 241 is inserted into the gap 251 from the cut-out portion 220 in the direction of the arrow 265 until surely coming into contact with the pressed portion 261 of the lock member 256. Then, the force of the lock release member compresses the spring 264 to cause the sliding portion 262 to be forced to slide towards the direction of the arrow 265, and this simultaneously causes the elastically deformable flat plate portion 257 to be elastically deformed as indicated by the dotted line to release the engagement between the engagement claw 260 and the engagement portion 267, thereby effecting the unlocked condition. In this case, as shown in Fig. 22, even if the lock release member 241 is inserted deviating towards any one side of the gap 251, the course of the lock release member will be corrected sliding downward on the inclined surface of the cut-out portion 280 of the lock member 256 immediately after said release member comes into contact with said inclined surface of the cut-out portion so that the release member stably contacts on the center line of the lock member 256 as indicated by the solid line to effect the release of the lock.

Thus, the lock release member 241 can be substantially prevented from being caught by the side wall of the case and the front lid and allowed to move surely to the release position of the lock member 256. Thus, the lock release member 241 can be smoothly inserted to the position of the lock member. In this case, even if the lock release member contacts with said side walls, the side walls rather serve as the guides for the lock release member. Further, said side walls will not produce any swarf or dust due to the abrasion, since the release member will not contact with said side walls, and, as a result, the cause of the previously mentioned dropout can be eliminated.

Besides, the lock member 256 is not inside the case (or on the side of the tape 202) but outside the case (or outside the side wall 215a), so that the lock member can be free of the adverse influence of the motion such as the entry of the dust into the inside of the case.

Further, the release member 241 can be surely inserted into the gap 251, since the release member is guided smoothly from the position of the cut-out portion 220 by the inclined surface 225 provided to the case. The presence of said cut-out portion 280 enables the lock member 256 to be elastically deformed largely enough when being contacted by the release member 241, and, on the other hand, the size (width) of the pressed portion 261 is made larger than the width of the release member 241 or the width W of the gap 251, so that, even when the width of the gap 251 is rather too large, the contact of the lock release member 241 can be made surely in an adequate contact area, whereby the release of the lock member can be accomplished through the stable performance of the lock release member. Further, being of said sliding type, the lock member 256 enables the positive installation and positive reciprocating motion at the time of locking and unlocking. The operation of locking the front lid will be explained as follows. When the force given by the release member 241, which is at the position indicated by a dotted line in Fig. 21, is removed, the sliding portion 262 slides forward due to the recovering force of the spring 264 and the engagement claw 260 simultaneously returns clockwise to engage with the engagement portion 267.

There is a preferable shape for the pressed portion 261 (or the release portion) of the lock member 256. For instance, as shown in Figs. 23 and 24, the pressed portion 261 may be provided with the inclined surfaces 280a, 280b and 280c in the three directions including the direction of the advance 265 (or A direction) of the release member, that is, in each of the A, B and C directions. In the example shown in Figs. 20 through 22, the inclined surface of the cut-out portion 280 actually functions as the pressed portion, but, for the rotary type lock member, which will be described later, the existence of said inclined surfaces 280b and 280c is convenient, since the existence of said inclined surfaces enables the release member to enter the cassette housing from any one of said three directions. The details of this mechanism will be described later.

Fig. 25 shows an example in which the rotary type lock member 256 is used.

In this example, the lock member 256 is mounted on the rotary shaft 270 so as to be rotatable in the gap 251 along the lateral inside surfaces of the cassette and forced to rotate clockwise by the leaf spring 274 installed on the wall 204 while the rotary position is regulated by the engagement portion 267.

In this locked condition, the release member 241 is moved into said gap 251 until coming into contact with the cut-out portion (lock release surface) 80, which has a triangular cross section, of the release portion 261 of the lock member 256 to cause the lock member 256 to rotate against the leaf spring 247 as indicated by the dotted line, whereby the engagement between the protrusion 267 of the front lid 212 and the engagement end 260 of the lock member 256 can be released.

In this example too, said members and portions are similar to those used in the example shown in Figs. 20 through 22 as the constituents of the cassette except that the lock member is of a rotary type. As described in reference to Figs. 18 and 24, the counterclockwise rotation (rotation for release) can be conducted easily where the pressed portion 261 of the lock member is provided with said inclined surface 280a so that the release member 241 comes into contact with said inclined surface.

According to the example shown in Fig. 26-A, 26-B, and 26-C, like the case of Fig. 26-A, when the contact portion (the front end) of the release member 241 is curved, the movement of the lock member 256 on the inclined surface 280 after the contact can be made easily. Fig. 26-B shows the case where the cut-out portion 28 is made to be a concave surface, and this concave surface shows the similar effect to that described above. Fig. 26-C shows the case where said inclined surface 280 is provided along the direction of the width of the release portion 261, and thus the cut-out portion 280 having a triangular cross section extends in the direction of the width. In the cases of said mechanisms, the release member 241 is shifted at lease towards the center of the direction of the thickness of the release portion 261 after the contact, so that the release of the lock can be effected more surely compared with the conventional examples.

Further, Figs. 27 and 28 show another example of the present invention.

This example concerning the lock mechanism similar to the one described in Fig. 40 is characterized by that the release member 256 is provided with the cut-out portion 280. Other members are similar to those shown in Fig. 40 and Fig. 15.

According to this example, as shown in Fig. 40, even if the release member 241 is deviated from the center with regard to the lock member 256, the front end of the release member is moved sliding on the inclined surface 280 to hold the stable position as is indicated by the dotted line, so that the contact of the release member 241 with the lock member 256 becomes surer than the conventional cases.

The examples of the present invention are described above; however, said examples can be further varied based on the technological concept of the present invention.

For example, the shape of the cut-out portion of the release portion of said lock member and the condition of the lock release member may be varied in many ways. Further, the width W of said gap 251 may also be varied without limiting to the case characterized by maintaining almost equal width throughout the portion ranging from the front surface of the cassette to the rear end of the side wall 212 of the front lid as is proposed in the said examples, so that even when the width of the portion of the gap ranging from the front surface of the cassette to the position of the release portion 261 is kept almost equal, the width of the following portion may be made wider. Further, the entry of the release member into the gap 251 can be made smoother where the inclined surface (or the cut-out) similar to said guiding surface 225 is provided to the wall surface (denoted by A in Fig. 1) of the front lid of the cut-out portion facing the guiding surface 225.

As discussed above, according to the present invention, the width of the gap between the lock member and the release member ranging at least to the release portion is made almost equal, so that the release member can be inserted quite smoothly into the gap substantially without being caught by the side walls of the cassette housing and the front lid. In this example, even if the release member contacts with said side walls, the side walls rather serve as the guides for the release member. Furthermore, the release member will not contact with said side walls, so that the wall will not produce any swarf or dust caused by the abrasion, and this contributes to the elimination of the cause of the previously discussed dropout.

Further, the size of the release portion of the lock member is made larger than the width of said gap, so that the sure contact covering an adequate contact area can be obtained for the sure release of the lock by the stable performance of the release member.

Further, the lock release portion will not protrude from the side surface of the cassette, so that there is no chance of having the release portion caught by a thing outside the cassette to cause the erroneous action.

Fig. 29 shows Example 2-3 for accomplishing the second object of the present invention.

According to this example, entirely unlike the conventional cases, the curved portion 270 is provided to the inside edge of the side wall 215a of the case facing the tape guide 209 at the tape outlet 245 through which the tape 202 is drawn out at the time of the tape loading. This curved portion is formed by molding but may be formed by polishing after the molding. The curved portion 271 is also provided to the rear end edge of the side wall 215a of the case.

Thus, as shown in Fig. 29, in the above-described structure, the front lid 210 is opened or closed as indicated by the dotted line according to the previously described action, and the tape 202 is guided smoothly on said curved portion 270 (further on 271) even if the tape comes into contact with said curved portion when being withdrawn from the opened outlet 245, so that the tape can be protected from being damaged. Especially, the tape 202 will not contact with the side wall 215a at the outlet 245, thereby enhancing the effect of said curved portion 270. Thus, the performance of the tape, especially the electromagnetic conversion characteristics, can be maintained at a satisfactory level.

Further, the presence of the curved portion 270 (further 271) not only facilitates the smooth run of the tape after being withdrawn but also prevents the sagging of the tape due to the damage.

The examples described in the foregoing can be varied further according to the technological concept of the present invention.

For example, said curved portion 270 (further 271) may take various curves including the cylindrical surface and their combination. Besides, said curves may be formed by molding, polishing and their combination.

As discussed previously, according to the present invention, the curved portion is provided to the front edge of the side wall of the cassette facing the tape guide at the tape outlet, so that the tape withdrawn from the outlet can be guided smoothly on said curved portion and protected from the damage. Thus, the performance of the tape, especially the electromagnetic conversion characteristics can be maintained at a satisfactory level.

Further, the run of the tape after being withdrawn is facilitated by the presence of said curved portion, and the sagging of the tape caused by the damage can also be prevented.

Figs. 30 and 31 show Example 2-4 for accomplishing the second object of the present invention.

According to the present invention, entirely unlike the conventional cases, in the slit-shape gap 251 (421 in the conventional example) into which the release member 241 is to be inserted, the side wall 215a of the cassette facing the side wall 212 of the front lid is formed at the front end surface (or said contact surface 244) of the cassette housing in parallel with the direction of insertion 265 of the release member 241. More particularly, in this case, the inclined surface described in Fig. 42 is not provided, and the portion ranging from front end position (or edge portion) 215c of the cassette to the side wall 215a is parallel with the direction of the arrow 265 of the release member 241. Thus, as shown in the enlarged drawing A of Fig. 30, said portion of the cassette housing has less chance of having the burrs or has less burrs even if the burrs have occurred at the time of the molding. That is, in molding the cassette housing, said edge portion can be molded with the metal molds by which the close contact between the molds can be ensured to lessen the occurrence of the burrs. Thus, the release member 241 can smoothly enter the gap 251 without being disturbed by the burrs, thereby ensuring the smooth and sure insertion of the release member.

The enlarged drawing B in Fig. 30 shows another example of the present invention.

In this example, the curved portions 270 and 271 are provided to the edge being chamfered after molding the edge similarly to the case shown in the enlarge drawing A in Fig. 30. Thus, the occurrence of the burrs at the time of molding can also be reduced substantially in the case of this example, but the smooth movement of the release member can be further facilitated by removing the burrs completely through the aftertreatment (chamfering).

Fig. 31 shows another example of the present invention.

This example differs from others in that the inclined surface 274 is provided to the release portion 261 of the lock member, along the inclined surface 273 of the side wall 215a of the cassette, wherein the inclined surface 274 is formed on the left side of the release portion 261 as shown in Fig. 31. Said inclined surface 273 extends towards the inside further than the inclined surface 223, so that the lock release member 241 can be guided more smoothly towards the lock member 256.

Thus, as shown in the enlarged drawing of Fig. 31, when the release portion 261 is displaced (Refer to Fig. 19) due to the contact with the release member 241, the displacement can take place effectively without any hitch along the inclined surface 273 as indicated by the dotted line.

Consequently, the smooth release of the lock becomes possible. However, if the release portion 261 described in Fig. 42 is applied to this example, as is obvious from Fig. 31, since said release portion is not provided with the inclined surface 274, the release portion is disposed close to the inclined surface 273, and, as a result, the release portion contacts with the side wall 215a (more precisely the inclined surface 273) at the time of said displacement to be prevented from moving further depending on the situation, thereby causing the failure or poor performance of said release portion.

As described in the foregoing, according to the present invention, the wall portion of the cassette housing facing the side wall of the front lid is disposed almost parallelly with the portion ranging from the front end surface of the cassette to the direction of insertion of the release member, so that the angular portions at the side wall within the region of the front end of the cassette can be reduced, and this enables the chances of the occurrence of the burrs at the time of the molding to be eliminated or reduced. Thus, the chances of having the entry of the release portion into the gap disturbed by the burrs can be eliminated, thereby enabling the smooth and sure insertion of the release member.

Referring to Fig. 32, an example to attain the third object of the invention will be described as follows.

In the tape cassette of this example, the tape guides 209a, 209b the outer circumferential surface of which is semi-cylindrical, are integrally provided to the bottom plate of the lower half case 1b and their height is larger than the tape 202 width. The stepped portion 290 to regulate the vertical movement of the tape is provided along the surfaces of the tape guides 209a, 209b.

Another stepped portion 291 which is connected to the stepped portion 290 to regulate the vertical movement of the tape, is provided to the front edge of the bottom plate of the lower half case 201b of the cassette housing.

The upper edges of the stepped portions 290, 291 to regulate the vertical movement of the tape are chamfered.

In tape cassette A, as shown in Fig. 15, the lock member to lock the front lid is provided to the space separated from the space in the cassette housing where the supply reel 203a and the take-up reel 203b are placed. In other words, the shaft portion of the lock member is placed in a space which is not connected to the space in the cassette housing 201 where the supply reel 203a and the take-up reel 203b are provided. Accordingly, even when the lock member is repeatedly rotated to lock the front lid; the shaft portion of the lock member and the bearing are not worn out; and abrasive powder is not scattered in the space where the shaft portion is placed; the abrasive powder never adheres to the tape surface. For that reason, problems are not caused such as decrease in the tape running efficiency stemming from the adhered abrasive powder and dropout caused when the tape is played.

In this example, the stepped portion 290 to regulate the vertical movement of the tape is provided to the surfaces of the tape guides 209a, 209b and another stepped portion 291 which is connected to the stepped portion 290 and the height of which is the same as that of the stepped portion 290, is provided to the bottom plate of the lower half case 201b. Accordingly, the tape is positively guided by the tape guide with the stepped portion described above. As a result, the front lid 211 and particularly the dust cover are prevented from coming into contact with the tape 202 edge when they are rotated to cover the tape. Consequently, the tape edge is not damaged.

Furthermore, the stepped portions 290, 291 regulate the vertical movement of the tape 202 not only when the tape cassette is assembled but also when the tape 202 is wound by the take-up reel 203b. Since the tape is regulated by the stepped portions for a relatively long distance, the tape running efficiency is high and the shape of the wound tape is excellent.

Since the stepped portions 290, 291 are chamfered, the tape edge is rarely damaged or folded.

Fig. 33-a, Fig. 33-b, Fig. 33-c, and Fig. 33-d are schematic sectional views of the main portion in the case of Example 3-2, 3-3, 3-4, and 3-5 of the cassette tape of the present invention, wherein the drawings are sectional views of the stepped portion 291 taken on line II-II of Fig. 32.

The structure of the tape cassette of the examples are almost the same as that of the above-described Example 3-1, although the sectional view is a little different. Therefore, the detailed explanation is omitted here.

The example illustrated in Fig. 14-a is preferable, wherein the upper surface of the stepped portion is formed by both the flat surface 291a and the curved surface 291b.

In the above-described examples, both the stepped portion 290 and the stepped portion 291 are provided to the tape cassette. However, the technological concept of the present invention is applied when either the stepped portion 290 or the stepped portion 291 is provided to the tape cassette. Although the stepped portions 290, 291 are provided only on the left side of the tape cassette in the drawings, it can be understood that the present invention is not limited to the left side of the tape cassette.

The characteristics of the tape cassette of the present invention will be described as follows.

The tape cassette of the present invention comprises; a cassette housing; a supply reel and a take-up reel provided in the cassette housing; a tape stretched at a predetermined position on a tape passage between the supply reel and the take-up reel; and a chamfered stepped portion provided to the cassette housing in order to regulate the vertical movement of the tape, wherein the vertical movement of the tape is positively regulated and furthermore the tape edge is not damaged by the stepped portion. As a result, the tape running efficiency is high, and recording and playback can be conducted in good condition.

## Claims

1. A tape cassette, comprising:
a housing in which a tape is wound around a pair of reels and along a predetermined path;
a front lid pivotably mounted on said housing to open or close the front side of said housing, said front lid having a protrusion member; and
lock means including
an attachment member attached to said housing to support said lock means,
an engaging member movable between a locking position in which said engaging member engages said protrusion member to lock said front lid in the closed condition and a releasing position in which said engaging member does not engage the protrusion member allowing said front lid to pivot to an open condition,
a biasing member for generating a biasing force to bias said lock means to the locking position, and
a releasing member responsive to an external actuating member for overcoming the biasing force of said biasing member to move said lock means to said releasing position.

2. A tape cassette according to claim 1 wherein said biasing member is resilient and the biasing force is dependent on the position of the engaging member.

3. A tape cassette according to claim 2 wherein said attachment member is a cantilever, one end of which is attached to a part of said housing and the other end of which is connected to said biasing member.

4. A tape cassette according to claim 3, wherein said one end of said attachment member and said part of said housing have complementary configurations so as to interconnect.

5. A tape cassette according to claim 3 or 4 wherein said engaging member and said releasing member are connected to said biasing member to form a Y-shape.

6. A tape cassette according to claim 1 or 2 wherein said attachment member is elongate and both ends are attached to parts of said housing, and said resilient member being connected to a middle part of said attachment member.

7. A tape cassette according to claim 6 wherein the cross section of both ends of said attachment member is non-circular.

8. A tape cassette according to claim 6 or 7 wherein both ends of said lever-shaped member and said parts of said housing have complementary configurations so as to interconnect.

9. A tape cassette according to claim 1 or 2 wherein said engaging member, said releasing member and said biasing member are connected in a Y-shape configuration and
wherein said attachment member is provided at the connection point of the Y-shape so that said engaging member pivots about said attachment member.

10. A tape cassette according to claim 9 wherein said biasing member is adapted to come into contact with a protrusion of said housing to generate a biasing force.

11. A tape cassette according to claim 9 or 10 wherein said attachment member is a shaft, both ends of which are supported by parts of said housing.

12. A tape cassette according to claim 9, wherein said attachment member is a through hole in the connection point of the Y-shape and is supported by a shaft fixed to said housing.

13. A tape cassette according to any one of the preceding claims, wherein said attachment member, said engaging member, said biasing member and said releasing member are formed as a unitary body.

14. A tape cassette according to any one of the preceding claims, wherein said attachment member, said engaging member, said biasing member and said releasing member are made of plastic.

15. A tape cassette according to any one of the preceding claims, wherein said front lid includes a front plate and a pair of side plates, each of said side plates is pivotably mounted on a side of said housing so that said front plate pivots so as to open or close the front side of said housing, and
wherein said protrusion member is provided on one of said side plate and said lock means is provided in a gap between said side plate and the side of said housing.

16. A tape cassette according to claim 15, wherein said gap is formed to allow said external actuating member to enter from the front side of said housing and proceed to said releasing member of said lock means, and
wherein the width of the gap between said side plate and the side of said housing is substantially the same from the front of said housing to the position of said releasing member.

17. A tape cassette according to claim 16, wherein said releasing member is larger than the gap width and does not protrude outside said side plate.

18. A tape cassette, comprising:
a housing in which a tape is wound around a pair of reels and along a predetermined path;
a front lid including a front plate and a pair of side plates wherein each of said side plates is pivotably mounted on a side of said housing so that said front plate pivots so as to open or close the front side of said housing, said front lid having a protrusion member on said side plate; and
lock means, provided in a gap portion between said side plate and the side of said housing, including
an engaging member adapted to move between a locking position in which said engaging member engages said protrusion member to lock said front lid in the closed position and a releasing position in which said engaging member does not engage said protrusion member to allow said front lid to pivot to the open position, said engagement member being biased toward said locking position, and
a releasing member responsive to an external actuating member to move said lock means to said releasing position;
said gap portion being formed to allow said external actuating member to enter from the front of said housing and proceed to said releasing member of said lock means wherein the width of the gap between said side plate and the side of said housing is substantially the same from the front of said housing to the position of said releasing member;
said releasing member being larger than the gap width and not protruding outside of said side plate.

19. A tape cassette according to any one of claims 15 to 18, wherein said gap width in the upper part of said gap is smaller than that in the lower part.

20. A tape cassette according to any one of claims 15 to 19 wherein said side of said housing facing said side plate is parallel to the direction of movement of said external actuating member.

21. A tape cassette according to any preceding claim further comprising a tape guide, provided in a front part of said housing proximate said predetermined path, to define the path of the tape, said tape guide being rounded to eliminate sharp edges.

22. A tape cassette, comprising:
a housing in which a tape is wound around a pair of reels and along a predetermined path;
a tape guide, provided on the front of said housing proximate to said predetermined path, to define the path of the tape, said tape guide being round to eliminate sharp edges.

EP 0 384 786 A2

# FIG. 1

# FIG. 2

# FIG. 3a

# FIG. 3b

# FIG. 3c

# FIG. 3d

# FIG. 4a

# FIG. 4b

# FIG. 4c

# FIG. 4d

# FIG. 4e

# FIG. 5

# FIG. 6a

# FIG. 6b

# FIG. 7a

# FIG. 7b

# FIG. 7c

# FIG. 7d

# FIG. 8a

# FIG. 8b

# FIG. 9

# FIG. 10

# FIG. 11

# FIG. 12 a

121d
115a
163
143
131
112
121
121c
175
161

# FIG. 12 b

121d
115a
163
131
112
121
121c

# FIG. 12 c

115a
163
143
121d
131
112
121
121c

# FIG. 12 d

115a
115b
121c
43
121d
112
131
121

# FIG. 12 e

121d
115a
115b
131
112
121
121c
143    143a    112a

EP 0 384 786 A2

# FIG. 13

# FIG. 14a   FIG. 14b

# FIG. 15

XVI

232  215
264
263
262
256
261  250
203  257
202  213a
216  260
213  212
219  217
209  240
215a  251
W

210  211  243  225  220
265

241

XVI

# FIG. 16

# FIG. 17

# FIG.18a    FIG.18b    FIG.18c

# FIG. 19

# FIG. 20

# FIG. 21

EP 0 384 786 A2

EP 0 384 786 A2

# FIG. 22

232 — 215
264
263
262
261 — 256
280 — 250
241
251
241
212
265

# FIG. 23

261 256
280a
280a
A
65 280c
280c 80b
80c
B
C

# FIG.24a  FIG.24b  FIG.24c

# FIG. 25

# FIG. 26a

256

261

241a

280

241

# FIG. 26b

256

261    280

# FIG. 26c

261

256

280

# FIG. 27

# FIG. 28

# FIG. 29

# FIG. 30

# FIG. 31

# FIG. 32

201a

209c

209b

201b

219

291  290

202

# FIG.33a

291a 291
291b

# FIG.33b

291

# FIG.33c

291

# FIG.33d

291

# FIG. 34

EP 0 384 786 A2

# FIG. 35

EP 0 384 786 A2

FIG. 36

FIG. 37

# FIG. 38

311
312
364
342
330
331
326
302
321
315a
315b

# FIG. 39

310
370
310
330

# FIG. 40

XLI

415
429
428
436
426
405
427
403
421b
402
413a
416
430
413
412
423
417
440
419
421a
409
421
415a
447
420
410   411   445   443   425
XLI

# FIG. 41

410   406   439   401a

417b
402
417a
409  413
411        417c  417        433
427
436        435
440        401b
436
420        430
442        429
444   443   423   431   404
437  441  432

# FIG. 42

# FIG. 43

590a

593

594

595

591

592

590b